(19) Europäisches Patentamt
European Patent Office
Office européen des brevets

(11) EP 2 304 256 B1

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(21) Anmeldenummer: 09765239.0

(22) Anmeldetag: **19.06.2009**

(51) Int Cl.:
*F16C 32/04* (2006.01)      *H02K 15/00* (2006.01)
*H02K 41/02* (2006.01)      *F16C 35/00* (2006.01)

(86) Internationale Anmeldenummer:
**PCT/AT2009/000246**

(87) Internationale Veröffentlichungsnummer:
**WO 2009/152545 (23.12.2009 Gazette 2009/52)**

(54) **AKTORSYSTEM**

ACTUATOR SYSTEM

SYSTEME D'ACTIONNEURS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.06.2008 AT 9852008**

(43) Veröffentlichungstag der Anmeldung:
**06.04.2011 Patentblatt 2011/14**

(73) Patentinhaber: **Technische Universität Wien
1040 Wien (AT)**

(72) Erfinder:
• **WASSERMANN, Johann
1210 Wien (AT)**
• **SCHULZ, Alexander
1190 Wien (AT)**
• **NEUMANN, Manfred
1210 Wien (AT)**

(74) Vertreter: **Sonn & Partner Patentanwälte
Riemergasse 14
1010 Wien (AT)**

(56) Entgegenhaltungen:
US-A- 5 469 007      US-A1- 2006 055 260
US-A1- 2008 073 993      US-B1- 6 278 251
US-B1- 6 781 276

• **Johann WASSERMANN: "Konzept für ein ausfallsicheres aktives Magnetlager" FWF - Fonds zur Förderung der wissenschaftlichen Forschung 12. Oktober 2006 (2006-10-12), XP002548544 Gefunden im Internet: URL:http://web.archive.org/web/20061012175 457/www.fwf.ac.at/de/abstracts/abstract.as p?L=D&PROJ=P19131> [gefunden am 2009-10-01]**
• **Gerald Spacek: "Konstruktion eines Magnetlages mit im Betrieb austauschbaren Elektromagneten" Technische Universität Wien 2. Mai 2007 (2007-05-02), XP002548545 Gefunden im Internet: URL:http://www.mdmt.tuwien.ac.at/de/index. php/Diplomarbeit_G._Spacek> [gefunden am 2009-09-22]**
• **MASLEN, SORTORE, GILLLIES, WILLIAMS, FEDIGAN, AIMONE: "Fault Tolerant Magnetic Bearings" TRANSACTIONS OF THE ASME, Bd. 121, 31. Juli 1999 (1999-07-31), - 31. Juli 1999 (1999-07-31) Seiten 504-507, XP009123541 DOI: 10.1115/1.2818501**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein durch redundante Anordnung von Elementen fehlertolerantes Aktorsystem mit mindestens einem Energiewandler.

In diversen technischen Bereichen, z.B. in der Produktion oder im Transportbereich, werden Aktorsysteme zur Krafteinbringung, Positionierung oder zur Schwingungsdämpfung, z.B. als Ersatz für herkömmliche Quetschöldämpfer bei der Schwingungsreduktion von Turbinenrotoren, eingesetzt. Dabei ist in der Regel der Energiewandler, z.B. ein krafteinbringender oder positionierender Teil des Aktorsystems, als eine im Betrieb nicht austauschbare mechanische Einheit ausgeführt.

Als "Aktor" wird hier ein Energiewandler mit zugehörigem Energiesteller (typischerweise Verstärker) bezeichnet, der die typisch von einer Steuerung oder Regelung zugeführte Führungsgrößen in die Stellgröße für ein beispielsweise mechanisches System umsetzt. Dazu ist in der Regel eine Hilfsenergie notwendig, die dem Aktor ebenfalls zuzuführen ist. Als "Intelligenter Aktor" wird ein geschlossenes System verstanden, das unter Berücksichtigung von Störeinflüssen das geforderte Stellsignal mit einer definierten Genauigkeit vorgibt. "Intelligente Aktoren" ermöglichen einen gesteuerten oder geregelten Betrieb. Neben der Stellaufgabe werden Diagnosefunktionen zur Selbstüberwachung integriert. Die Führungsgröße wird typisch digital über eine Busschnittstelle übertragen.

Für Systeme mit hohen Ansprüchen an die Zuverlässigkeit und Verfügbarkeit ist eine Redundanz im Bereich der Regelung, Steuerung, bei Energiestellern, Energiewandlern und Sensoren Stand der Technik. Die Baugruppen Regelung, Steuerung oder Energiesteller können im Falle eines Defektes im Betrieb neu konfiguriert, deaktiviert oder sogar ausgetauscht werden (in der Fachliteratur und nachfolgend auch hier kurz "Hot-Swap" genannt).

Nachteilig für Systeme, bei denen höchste Zuverlässigkeit bei 100 %-iger Verfügbarkeit (kein Ausfall) gefordert wird, ist jedoch, dass bei Aktorsystemen nach dem Stand der Technik höchstens eine Austauschmöglichkeit des kompletten Energiewandlers im Betrieb gegeben ist.

Die Erfindung ermöglicht durch eine spezielle Ausführung des Energiewandlers, dass dieser in Teilbereichen austauschbar und reparierbar ist, wodurch eine 100 %-ige Verfügbarkeit von Aktoren für Anwendungen gegeben ist, bei denen ein Ausfall besonders kritisch ist, z.B. wo Gesundheit oder gar Menschenleben gefährdet sind, wie beispielsweise in der Medizintechnik, bei der Unterstützung von Organfunktionen (Blutpumpen, Dialysesysteme, etc.).

Diese 100 %-ige Verfügbarkeit von Aktoren kann aber auch wirtschaftlich von besonderem Interesse sein, wie etwa bei Anlagen, wo neben den Kosten eines Produktionsausfalls während eines Stillstandes aufgrund einer Reparatur des Energiewandlers auch noch hohe Kosten zur Wiederinbetriebsetzung dieser Anlagen (Erreichung der geforderten Qualität eines Produktes) entstehen.

Beispielsweise sind für magnetische Aktoren (aktive Magnetlager) mit hoher Zuverlässigkeit aus US 5 578 880 A Konzepte bekannt, die eine aus zwei Ebenen bestehende Architektur aufweisen. Mindestens drei voneinander unabhängige Achsenregler, die zwei einander gegenüberliegende Elektromagnete eines Magnetlagerstators ansteuern, wobei mindestens zwei Achsen für korrekte Funktion benötigt werden, werden von einem oder mehreren Supervisor-Leitrechnern angesteuert. Jeder Achsenregler weist eine unabhängige Stromversorgung auf und besteht aus einem Mikrocontroller als lokalen Achsenregler, einem Netzteil sowie einem Konverter inklusive zugehöriger Gatetreiber zur Ansteuerung der Elektromagnete einer Achse. Nachteilig bei diesem Konzept ist, dass kein Konzept einer Fehlererkennung für die Supervisor-Leitrechner behandelt wird und dass defekte Teile des Energiewandlers nicht im Betrieb austauschbar sind.

Ein Konzept, bei dem die Funktionen zweier Energiewandler gekoppelt werden, ist aus EP 1 216 912 A bekannt. Zwei Stellmotoren treiben über selbsthemmende Getriebe und ein Summierungsgetriebe eine Welle an. Die Stellmotoren werden jeweils mittels einer unabhängigen Steuerung und Leistungsendstufe angesteuert, wobei eine Vergleichersteuerung die Funktion der beiden Steuerungen überwacht und im Fehlerfall eine der beiden deaktiviert. Im Fall eines Ausfalls der Vergleichersteuerung erfolgt eine Freigabe beider Steuerungen. Nachteilig hierbei ist, dass die Vergleichersteuerung einen sogenannten "Single Point of Failure" darstellt und keine Funktionsüberprüfung der Vergleichersteuerung vorhanden ist, wodurch dennoch ein Ausfall des Systems möglich ist; weiters findet kein Funktionstest der Deaktivierung bzw. Freigabefunktion der Steuerungen im Betrieb statt, wodurch ein Fehler, wie beispielsweise ein Verschweißen der Kontakte der eingesetzten Relais, eine Deaktivierung einer defekten Steuerung verhindert. Auch hier ist kein Hot-Swap eines defekten Energiewandlers vorgesehen.

Ein weiteres, aus US 5 806 805 A bekanntes Konzept eines Ansteuersystems für einen Aktor zur Flugsteuerung setzt mehrere primäre Flugsteuercomputer ein, die jeweils eine Leistungssteuerung ansprechen. Jede Leistungssteuerung steuert in weiterer Folge jeweils eine Spule von jedem der, ebenfalls mehreren, elektrohydraulischen Servoventile an, welche jeweils einen Aktor ansteuern. Alle Aktoren gemeinsam steuern in Folge ein Leitwerk an. Da mittels der Spulen eine Addition der magnetischen Flüsse durchgeführt wird, ist auch eine Betätigung bei einem Defekt einer Ansteuerung möglich. Damit alle Aktoren möglichst gleiche Kräfte generieren, was für eine geringe Belastung des Leitwerks von Bedeutung ist, werden einerseits alle Aktorströme gemessen, jeder Leistungssteuerung zugeführt und ausgeglichen, und andererseits werden auch die erzeugten Kräfte aller Aktoren gemessen und jedem Flugsteuercomputer zugeführt. Der Flugsteuercomputer passt die Stellgröße für die zugeordnete Leistungssteuerung für möglichst gleiche Kräfte an. Nachteilig ist bei diesem System, dass keine Entkopplung defekter Baugruppen erfolgt und somit beispielsweise ein undefinierter Strom aufgrund eines Defekts einer Leistungssteuerung durch die übrigen, funktionierenden Leistungssteuerungen kompensiert werden muss.

Ein weiteres, nur ganz allgemein gehaltenes Konzept zur aktiven magnetischen Lagerung von Strukturen wird in J. Wassermann ("Kurzbeschreibung des Projekts: Konzept für ein ausfallsicheres aktives Magnetlager", http://web.archive·org/web/20061012175457/ www.fwf.ac.at/de/abstr acts/abstract.asp?L=D&PROJ= P19131) kurz angedeutet. Als Ziel wird eine komplette Redundanz für alle Baugruppen (Regler, Sensoren, Verstärker, Lagermagnet etc.) bei vollständig dezentraler Magnetlagerstruktur genannt. Im Vergleich zu früheren Konzepten zielt dieses Konzept auch auf eine Redundanz und den Austausch des Lagermagneten im Betrieb ab.

Von Nachteil ist hier, dass eine Redundanz des Lagermagneten sowohl wegen der dezentralen Kraftwirkung als auch wegen der Baugröße technisch unvorteilhaft ist; im Übrigen gibt es keine Hinweise, wie dieser Austausch im Betrieb (Hot-Swap) technisch ausgeführt werden könnte.

Nachteilig bei allen oben aufgeführten Konzepten ist, dass kein "Hot-Swap" von Teilen des Energiewandlers möglich ist und damit ein unterbrechungsfreier Betrieb mit 100% Verfügbarkeit nicht gegeben ist.

Das Dokument US 2004/0124796 A1 offenbart einen fehlertoleranten Elektromotor mit während des Betriebs austauschbaren Modulen.

Es ist nun Aufgabe der Erfindung, einen unterbrechungsfreien Betrieb eines Aktorsystems wie Eingangs angegeben auf einfach und effiziente Weise über einen praktisch beliebigen Zeitraum hinweg zu ermöglichen.

Zur Lösung der gestellten Aufgabe sieht die Erfindung ein Aktorsystem wie im Anspruch 1 definiert vor. Vorteilhafte Ausführungsformen und Weiterbildungen sind in den abhängigen Ansprüchen angegeben.

Die Erfindung ermöglicht durch eine spezielle Ausführung des Energiewandlers, dass dieser in Teilbereichen austauschbar und reparierbar ist, wodurch eine 100 %-ige Verfügbarkeit von Aktorsystemen für Anwendungen gegeben ist, bei denen ein Ausfall besonders kritisch ist, z.B. wo Gesundheit oder gar Menschenleben gefährdet sind, wie beispielsweise in der Medizintechnik, bei der Unterstützung von Organfunktionen (Blutpumpen, Dialysesysteme, etc.).Diese 100 %-ige Verfügbarkeit von Aktoren kann aber auch wirtschaftlich von besonderem Interesse sein, wie z.B. bei Anlagen, wo neben den Kosten eines Produktionsausfalls während eines Stillstandes aufgrund einer Reparatur des Energiewandlers auch noch hohe Kosten zur Wiederinbetriebsetzung dieser Anlagen (Erreichung der geforderten Qualität eines Produktes) entstehen.

Insbesondere wird erfindungsgemäß eine spezielle Ausführung des Energiewandlers vorgesehen, die einen unterbrechungsfreien Aktorbetrieb über einen beliebigen Zeitraum hinweg ermöglicht. Grundsätzlich besteht der erfindungsgemäße Energiewandler aus einzelnen im Betrieb austauschbaren und redundant vorhandenen Submodulen oder Subeinheiten, den sog. "HSSA" (engl.: Hot-Swap-Sub-Assembly), die unabhängige, dezentrale Kanäle definieren. Dadurch kann gegenüber vollständig redundanten Energiewandlern eine kompaktere Ausführung bzw. ein für den technischen Anwendungsfall optimaler Wirkungsbereich des Energiewandlers (z.B. Kraftangriffspunkte) konstruktiv realisiert werden. Weiters ist jedem Energiewandler-Submodul für die unabhängige, dezentrale Bauweise eine eigene, integrierte Steuer- bzw. Regeleinheit zugeordnet.

Es sind unterschiedliche Implementierungstiefen und Ausführungsformen der HSSA für einen Aktor vorgesehen:

(1) Energiewandler, bei dem nur die redundanten Submodule zur Energiewandlung auch im Betrieb austauschbar sind (nachfolgend auch HSSA-E genannt),

(2) HSSA-E mit ein oder mehreren integrierten Sensoren in diesem Submodul, die gemeinsam mit dem HSSA-E im Betrieb tauschbar sind (nachfolgend auch HSSA-EIS genannt),

(3) (HSSA-E und/oder HSSA-EIS mit im Betrieb austauschbaren Energiestellern als eine Einheit mit dem zugehörigen Teil des Energiewandlers oder getrennt im Betrieb austauschbar (nachfolgend auch HSSA-A genannt)

(4) Als im Betrieb austauschbares Submodul für einen "Intelligenten Aktor" (nachfolgend auch HSSA-I genannt), d.h. auch mit im Betrieb austauschbaren Sensoren, Energiestellern und/oder Regelung/ Steuerung und Fehlererkennung, je nach Erfordernis als eine Einheit mit dem zugehörigen HSSA-E oder getrennt.

Bei Ausfall einzelner Submodule ist dennoch die Funktionalität des Aktors (z.B. Krafteinbringung, Positionierung und/oder Schwingungsdämpfung) aufgrund der redundanten, d.h. jeweils übrigen, funktionierenden Submodule gegeben.

In einer bevorzugten Ausführungsform weist das Aktorsystem folgende Merkmale auf:

- Das Aktorsystem besteht aus redundant vorhandenen, im Betrieb austauschbaren Submodulen (HSSA);
- alle aktivierten und fehlerfrei arbeitenden Submodule tragen aktiv zur Funktion des Aktorsystems bei;
- die Funktionalität jedes Submoduls wird fortwährend im Betrieb überprüft; eine Fehlfunktion/ein Ausfall eines Submoduls führt zu dessen sofortiger Deaktivierung, wodurch die Funktion des Aktors bzw. Energiewandlers nicht gestört wird (bei HSSA-I ist diese Funktionalität bereits integriert);

• bei einer Fehlfunktion, einem Ausfall bzw. einer Deaktivierung eines Submoduls übernehmen die restlichen funktionierenden Submodule die komplette Funktionalität;

• jedes Submodul hat zusätzlich die für die (unabhängige, dezentrale) Regelung und/oder Ansteuerung und/oder Fehlererkennung erforderlichen Sensoren integriert (Ausführung als HSSA-EIS);

• die Regelung, Ansteuerung und Fehlererkennung der HSSA-E, -EIS, -A und -I Submodule kann mittels an sich bekannter Technologien betreffend zuverlässige Systeme durchgeführt werden; vorteilhafterweise kommt zur Regelung/Steuerung, Energiesteller und Fehlererkennung eine vollständig dezentrale Architektur zum Einsatz; hierbei werden alle Submodule mit Hilfe von vollständig autonom arbeitenden Regelungen/Steuerungen sowie vorzugsweise auch Energiestellern und Fehlererkennungen betrieben; dadurch kann eine 100%ige Verfügbarkeit des Aktorsystems erzielt werden.

Der Aufbau des Aktorsystems bzw. Energiewandlers aus im Betrieb austauschbaren und redundant vorhandenen Submodulen ermöglicht es, dass das Aktorsystem mit der gewünschten Qualität arbeiten kann, auch wenn einzelne Submodule keine korrekte Funktionalität aufweisen oder nicht alle vorgesehenen Submodule eingebaut oder aktiviert sind.

Durch die Austauschmöglichkeit der Submodule im Betrieb sind verschiedene Servicestrategien möglich: Beispielsweise ein Service mit vorgegebenen Serviceintervallen; oder aber ein sofortiger Austausch defekter Submodule, wobei nach dem Austausch die ursprüngliche Zuverlässigkeit wiederhergestellt ist.

Vorteilhafterweise erfolgt ein Betrieb mit "heißer" Redundanz, d.h. dass alle fehlerfrei arbeitenden Submodule aktiviert sind und zur Funktion des Aktorsystems beitragen. Dadurch ist zum einen eine geringere Belastung jedes Submoduls samt Energiesteller etc. und zum anderen die Möglichkeit der fortwährenden Funktionsüberprüfung im Betrieb gegeben. Die geringere Belastung jedes Submoduls führt zu einer Erhöhung der Lebensdauer. Die fortwährende und umfangreiche Funktionsüberprüfung im Betrieb ermöglicht eine zuverlässige Erkennung von fehlerhaften Submodulen, was bei kalter Redundanz, wo ein redundantes Element erst bei Gebrauch zugeschaltet wird, nicht im vollen Funktionsumfang gegeben ist, wodurch keine Information darüber besteht, ob die Redundanz überhaupt gewährleistet ist.

Die fortwährend im Betrieb durchgeführte Funktionsüberprüfung der Submodule ermöglicht eine ehestmögliche Erkennung einer Fehlfunktion oder eines Ausfalls mit minimalen Auswirkungen auf das Verhalten des gesamten Aktorsystems. Eine Deaktivierung eines defekten Submoduls bei Fehlfunktion oder Ausfall führt gegenüber dem Versuch einer Kompensation der Funktionsstörung (beispielsweise durch Rekonfiguration oder einen eingeschränkten Betrieb) zu einem zuverlässigeren Gesamtverhalten, da nur zwischen "funktionsfähig" bzw. "defekt" entschieden und keine mit Risiken verbundene Entscheidung, welcher Teil einen Defekt aufweist und wie dieser Defekt - z.B. durch Umkonfiguration des Systems - kompensiert werden kann, durchgeführt werden muss, letzteres mit der zusätzlichen Gefahr einer Fehlerfortpflanzung.

Die Integration aller für die Regelung und/oder Ansteuerung und/oder Fehlererkennung erforderlichen Sensoren etc. im Submodul ermöglicht, dass das komplette Submodul noch vor dem Einbau in das Aktorsystem kalibriert und auf seine Funktionalität überprüft werden kann, und dass demgemäß ein einfacher "Hot-Swap" möglich ist.

Die Funktion jedes Submoduls wird fortwährend mittels einer eigenen Fehlerdetektionseinheit, die vorteilhafterweise vollständig autonom arbeitet, überprüft. Im einzelnen sind jedem Energiewandler-Submodul Istgrößen-Erfassungsmittel zur Erfassung eines Betriebs-Istzustands zugeordnet, und diese Istgrößen-Erfassungsmittel gehören zu einer integrierten Fehlerdetektionseinheit des Energiewandler-Submoduls.

Eine vollständig dezentrale Architektur des gesamten Aktorsystems resultiert in höchster Zuverlässigkeit, weil keine zentrale Baugruppe vorhanden ist, aus deren Fehlfunktion eine Fehlfunktion des gesamten Aktorsystems resultieren würde ("Single-Point of Failure"). Eine Fehlerfortpflanzung zwischen den Submodulen ist aufgrund einer dezentralen Architektur des Aktorsystems dann ausgeschlossen, wenn jedes Submodul vollständig von allen übrigen Submodulen entkoppelt ist.

Zur Funktionsüberprüfung werden vorteilhafterweise die während des Prozesses auftretenden Größen sowie deren Änderungen durch Vergleich mit Referenzgrößen überwacht; zu starke Abweichung voneinander werden als Fehler gewertet. Die jeweiligen Referenzgrößen werden abhängig vom aktuellen Zustand des Systems passend gewählt, wobei beispielsweise mathematische Modelle der Baugruppen des Submoduls und/oder des Prozesses oder Redundanz herangezogen werden können.

Durch die Erfindung ist demgemäß ein Aktorsystem mit höchster Zuverlässigkeit und 100%iger Verfügbarkeit realisierbar. Das hat in allen Anwendungsbereichen höchste Relevanz, wo ein wirtschaftlicher Schaden oder eine Gefährdung menschlichen Lebens durch einen Ausfall oder eine Fehlfunktion entstehen kann, z.B. bei Produktionsmaschinen oder sicherheitsrelevanten Einrichtungen.

Besonders bevorzugte Ausführungsformen des erfindungsgemäßen Aktorsystems weisen somit folgende Kennzeichen auf:

- die Fehlerdetektionseinheit ist eingerichtet, eine Funktionsfehlerüberprüfung durch Vergleich von Istzustands-Signalen mit Referenzsignalen durchzuführen

- jedem Energiewandler-Submodul ist eine Deaktivierungseinheit zugeordnet, wobei die Deaktivierungseinheit im Energiewandler-Submodul integriert ist

- die Deaktivierungseinheit ist mit der Fehlerdetektionseinheit verbunden oder aber in diese integriert

- jedem Energiewandler-Submodul ist ein integrierter (z.B. elektronischer) Energiesteller zugeordnet, wobei vorzugsweise jedes Energiewandler-Submodul mit einem gegenüber den anderen Submodulen entkoppelten Energiesteller versehen ist

- dem Energiesteller ist ein eigener, die Deaktivierungseinheit zumindest zum Teil bildender Schaltverstärker zugeordnet

- die Energiewandler-Submodule sind mit einem Prozessleitrechner verbunden, und diese Verbindung ist bevorzugt mittels galvanischer Trennung ausgeführt

- die Submodule bzw. Regeleinheiten enthalten eigene - mit austauschbare - Sensoren, z.B. Abstands- bzw. Positions-, Rotations-, Strom- und/oder Spannungssensoren

- alle Submodule sind im Betrieb des Aktorsystems aktiv oder

- zumindest ein Submodul ist im Betrieb des Aktorsystems teilaktiviert oder deaktiviert

- einzelne Submodule sind auch im teilaktivierten oder abgeschalteten Zustand de Aktorsystems austauschbar

- es liegt eine galvanische Trennung zwischen dem Energiesteller und der Fehlerdetektionseinheit vor

- in entsprechender Weise liegt eine galvanische Trennung zwischen dem Energiesteller und der Steuer- bzw. Regeleinheit vor

- das Aktorsystem ist bevorzugt als radial und/oder axial aktives Elektromagnetlager für einen Rotor, als Motor, z.B. Reluktanzmotor oder Motor mit Permanentmagnet-Rotor, zum Antrieb einer Welle, oder zur elektromagnetischen Lagerung eines Strukturteils in Richtung zumindest einer Achse, als elektromagnetisches Trag- und Positioniersystem für einen Bauteil, ausgebildet

- die Energiewandler-Submodule weisen Elektromagnete auf, die als im Betrieb tauschbare Einschubteile in einem Lagergehäuse ausgebildet sind

- die Einschubteile und das Lagergehäuse weisen zueinander passende Führungs- und Montageflächen auf

- jedes Submodul ist mit zumindest einem, vorzugsweise zumindest zwei unabhängigen Abstands- bzw. Positions-, Fluss-, Drehwinkel-, Drehrichtungs- und/oder Drehgeschwindigkeits-Erfassungsmitteln ausgeführt

- das Aktorsystem kann auch für einen Verdichter verwendet werden, wobei im Aktorsystem ein axial und radial aktives Magnetlager für einen Rotor und ein Aktorsystem einen Motor zum Antrieb des Rotors bildet

- es könnten auch mehrere Submodule jeweils eine gemeinsame Energieversorgung aufweisen.

Die Erfindung wird nachfolgend anhand von in der Zeichnung dargestellten bevorzugten Ausführungsbeispielen, auf die sie jedoch nicht beschränkt sein soll, noch weiter erläutert. In der Zeichnung zeigen im einzelnen:

Fig. 1a eine schematische schaubildliche Vorderansicht eines Stators eines Magnetlager-Aktorsystems, mit sechs Elektromagneteinheiten als Energiewandler-Submodule, wobei ein Submodul in einem aus seiner Ausnehmung herausgezogenen Zustand gezeigt ist;

Fig. 1b eine entsprechende Darstellung eines solchen Aktorsystems, wobei alle Submodule eingebaut dargestellt sind und überdies eine Schutzabdeckung veranschaulicht ist;

Fig. 2 eine schematische Schnittdarstellung der Lagerung eines Rotors an einem Ende zwischen zwei derartigen Submodulen gemäß Fig. 1a bzw. 1b;

die Fig. 3a und 3b in schaubildlichen Ansichten (Vorderansicht bzw. Rückansicht) ein derartiges Submodul;

Fig. 4 ein Magnetlager-Aktorsystem gemäß der Erfindung in Form eines allgemeinen Blockschaltbildes;

Fig. 5 ein Blockschaltbild des Elektronikteils eines solchen Submoduls mehr im Detail;

Fig. 6 Steuerimpulse und Stromdiagramme zu diesem Blockschaltbild gemäß Fig. 5;

Fig. 7 eine schaubildliche Ansicht eines Rotorteststands mit einem radialen aktiven Magnetlager als Aktorsystem, im Wesentlichen gemäß den Fig. 1 bis 6;

Fig. 8 eine schaubildliche Darstellung eines axialen aktiven Elektromagnetlagers eines Rotors als Aktorsystem mit redundanten Submodulen, wobei das Lagergehäuse weggelassen wurde;

Fig. 9 ein Prinzipschaltbild für den Fall von "Self-Sensing" für eine Regelung bei den erfindungsgemäßen Submodulen, wenn kein gesonderter Abstands- bzw. Positionssensor vorgesehen ist;

die Fig. 10a, 10b, 10c verschiedene Varianten für eine etwaige Kommunikation zwischen Submodulen;

Fig. 11 in den Teilfiguren 11a, 11b, 11c verschiedene Ausführungsbeispiele für die lösbare Befestigung von Submodulen, mit der Möglichkeiten eines leichten Austauschs;

Fig. 12 in vier übereinander dargestellten Diagrammen die Verläufe von Rotorauslenkungen in x-Richtung bzw. y-Richtung sowie Kraftverläufe, wobei eine Störkraft wie in Fig. 13 dargestellt aufgebracht wird;

Fig. 13 ein Schema zur Veranschaulichung der Positionen und Kraftwirkrichtungen von sechs Submodulen in kreisförmiger Anordnung, für die Lagerung eines Rotors, mit Darstellung einer Störkraft in 45 Grad-Richtung, wie dies den Diagrammen gemäß Fig. 12 zugrunde liegt;

Fig. 14 schematisch in schaubildlicher Ansicht eine allgemeine magnetische Lagerung für eine horizontale Achse als Aktorsystem, mit insgesamt acht Doppel-Submodulen; und

Fig. 15 ein Schema eines Elektromotors, hier beispielhaft in Form eines Reluktanzmotors, mit der Hot-Swap-Funktion gemäß der Erfindung.

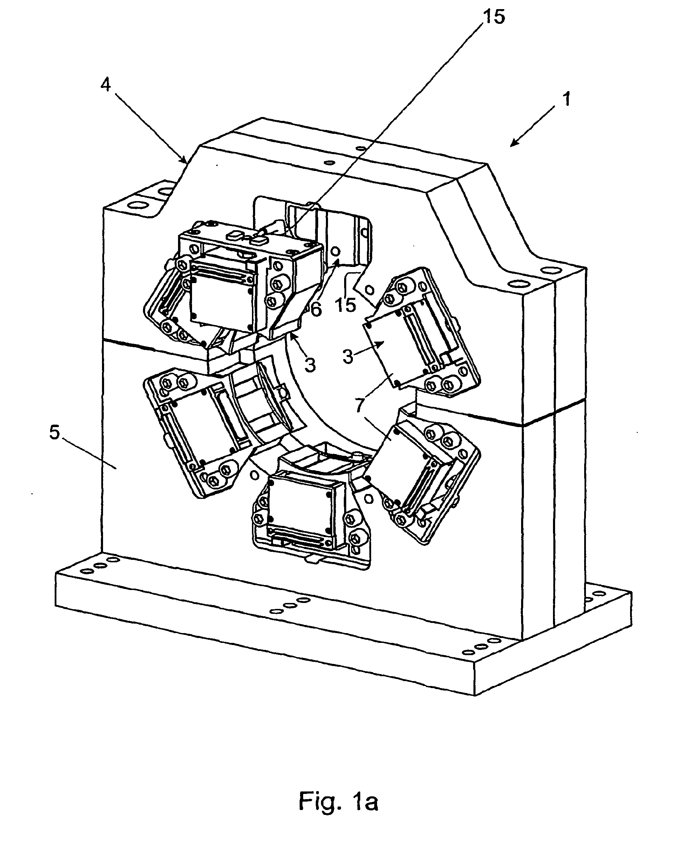

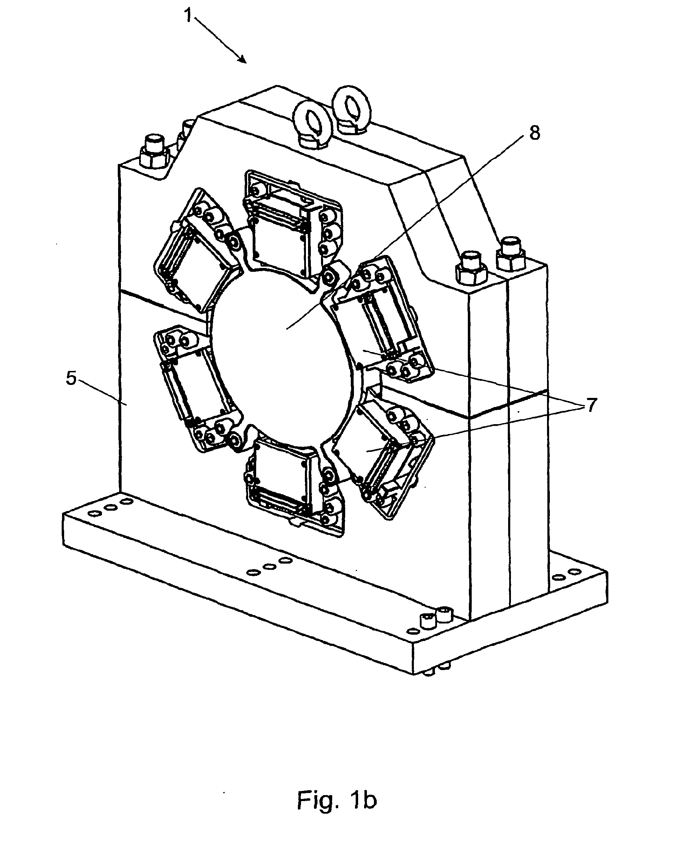

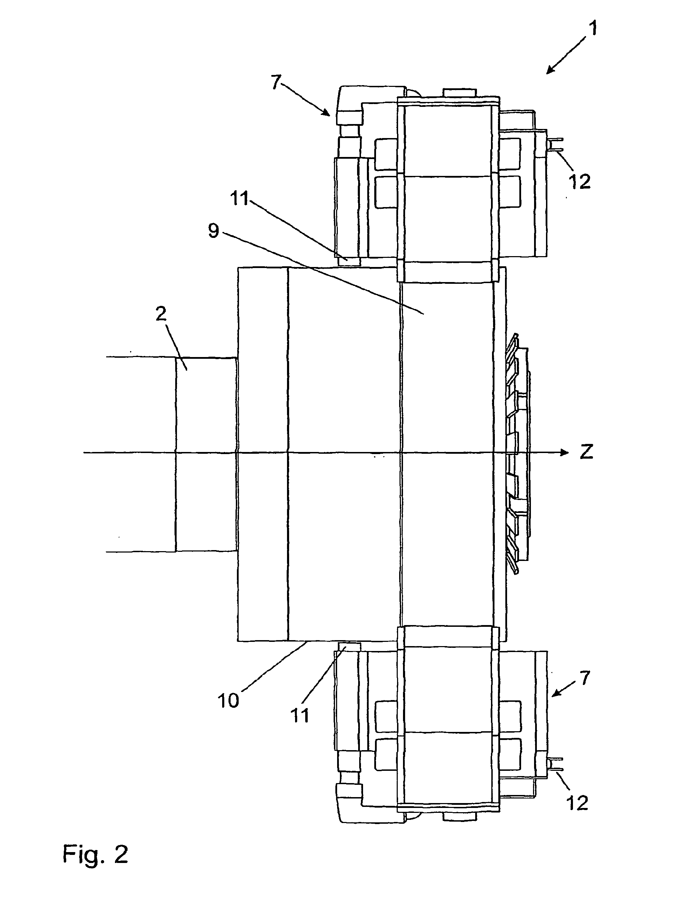

In den Fig. 1 bis 3 ist als besonders bevorzugtes Ausführungsbeispiel der Erfindung ein elektromagnetisches Aktorsystem 1 zur berührungsfreien magnetischen Lagerung eines mit einer Welle 2 verbundenen ferromagnetischen Rotorteilstücks 9 des Energiewandlers (s. Fig. 2) in radialer Richtung (ein aktives radiales Magnetlager 1) dargestellt.

Eine konkrete Ausführung eines elektromagnetischen Aktors ist ein aktives Magnetlager. Es dient zur berührungsfreien Lagerung von Strukturen, beispielsweise einer drehenden Welle (Rotor) 2.

Ein aktives Magnetlager zur radialen Lagerung einer drehenden Welle enthält typisch einen Regler, Sensoren für die Bestimmung des Abstands der zu lagernden Struktur von einer Referenzposition, Stromsensoren und einen Lagermagneten bestehend aus einem ferromagnetischen Statorteil in einem Lagergehäuse, samt auf den Polschenkeln montierten Spulen, und einem ferromagnetischen Rotorteil, der auf der Welle der Maschine montiert wird.

Der Stator- und Rotorteil wird jeweils zur Verringerung von Wirbelströmen aus einzelnen, dünnen ferromagnetischen Blechen, ähnlich wie bei der Herstellung eines Elektromotors, aufgebaut. Die Bleche des Rotorteils sind kreisförmig, mit einer für den erforderlichen magnetischen Fluss, vorgegeben durch die gewünschten Lagerkräfte, benötigten Stegbreite ausgeführt.

Der Statorteil des Lagermagneten besteht ebenfalls meist aus gestanzten kreisrunden Einzelblechen mit nach innen gerichteten, ausgeprägten Polschenkeln, die mit einer Klemmeinrichtung zusammengehalten werden. Auf den einzelnen Polschenkeln befinden sich Spulen, durch die mit Hilfe des elektrischen Stromes, nach dem Prinzip des Hubmagneten, Kräfte auf den Rotorteil aufgebracht werden. Damit wird eine berührungsfreie Lagerung der Struktur, in diesem Beispiel eines Rotors, ermöglicht.

Die Fig. 1a zeigt einen Statorteil 4 mit Energiewandler-Komponenten 3 eines solchen Aktorsystems 1. Ein Lagergehäuse 5 weist Aufnahmen 6 für im Betrieb austauschbare Energiewandler-Submodule 7 auf, wobei letztere in Fig. 1 teilmontiert gezeigt sind. In Fig. 1b sind die Submodule 7 komplett montiert veranschaulicht, wobei weiters ein Schutz 8 vor Berührung des Endes des Rotors 2 (in Fig. 1 nicht gezeigt, s. aber Fig. 2) dargestellt ist.

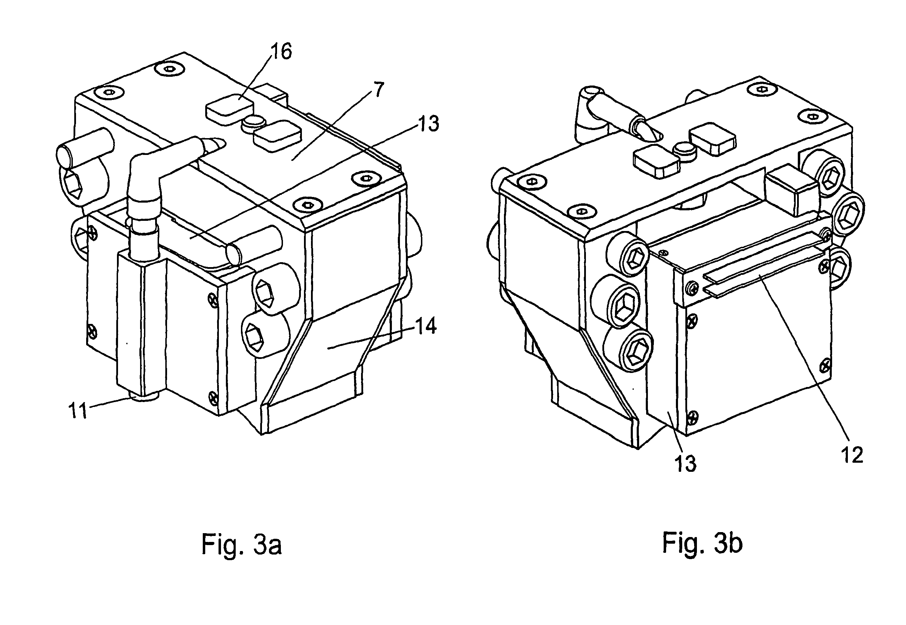

Fig. 2 zeigt den zu lagernden Rotor 2 samt einem ferromagnetischen Rotorteilstück 9 für das Magnetlager 1 und einer Messspur 10 für in den Submodulen 7 als Istgrößen-Erfassungsmittel angeordnete Abstands- bzw. Positionssensoren 11. Zur Verdeutlichung der Lage der Submodule 7 relativ zum Rotor 2 sind zwei Submodule 7, jedoch ohne Lagergehäuse, dargestellt. Weiters ist aus Fig. 2 sowie insbesondere aus den Fig. 3a und 3b, die die Vorder- bzw. Rückseite eines Submoduls 7 zeigen, noch ersichtlich, dass die Submodule 7 jeweils Steckverbinder 12, Spulenwickel 13, Auflage- bzw. Montageflächen 14, die mit Führungsflächen 15 der Aufnahmen 6 zusammenpassen (Fig. 1), und Befestigungselemente 16 aufweisen, wobei sie auch je (zumindest) einen Abstands- bzw. Positionssensor 11 integriert haben. Die Integration eines Abstands- bzw. Positionssensors 11 im Submodul 7 ermöglicht einen einfachen Tausch des Submoduls 7 samt Abstands- bzw. Positionssensor 11. Die mechanische Endjustage des Abstands- bzw. Positionssensors 11 sowie die elektronische Justage der gesamten Messkette (Sensorempfindlichkeit bzw. Kennlinienkorrektur) erfolgt am besten mit einer externen Messeinrichtung (nicht dargestellt), mit der auch eine Aufnahme des Kennfelds des Energiewandlers insgesamt (z.B. Kraft über Strom und Luftspalt) sowie eine Justage bzw. Optimierung samt Funktionstest des kompletten Submoduls 7 vor dem Einbau in das Aktorsystem 1 erfolgen kann.

Über den Steckverbinder 12 erfolgt die Energiezufuhr für den Spulenwickel 13 und die Speisung des Abstands- bzw. Positionssensors 11 sowie die Signalübertragung. Der Abstands- bzw. Positionssensor 11 erfasst den Abstand zur Messspur 10 des Rotors 2 für das jeweilige Submodul 7. Alternativ oder zusätzlich kann auch ein Magnetfeldsensor (z.B. Hallsensor) eingesetzt werden.

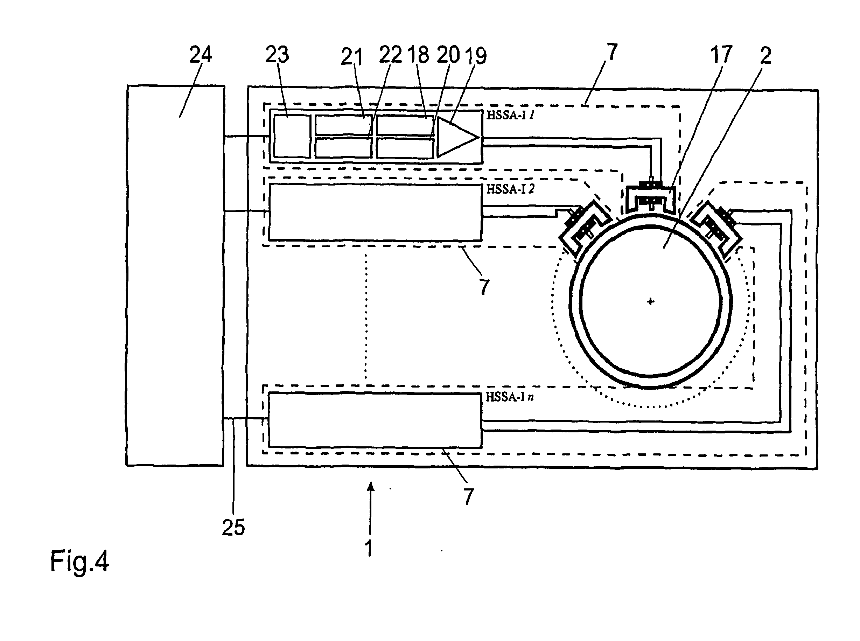

Der elektromagnetische Fluss wird im Betrieb mit Hilfe des stromdurchflossenen Spulenwickels 13 und z.B. von E-Kern-Blechen, die auf der zum Rotor 2 zeigenden Seite kreissegmentförmig bearbeitet sind, d. h. mit Hilfe von Elektromagneten 17 (Fig. 4), zusammen mit der Rotorblechung 9 generiert. Bei der Montage des Submoduls 7 wird dessen Montagefläche 14 nach dem Einschieben in die Solllage mittels der Befestigungselemente 16 an die Führungs- und Konterfläche 15 des Stators 4 gepresst.

In Fig. 4 ist ein Blockschaltbild einer vollständig dezentralen Ansteuerung und Regelung eines Energiewandlers des Aktorsystems 1 gezeigt. Je nach Implementierungstiefe bzw. technischem Bedarf können bei diesem Konzept HSSA-EIS, HSSA-A oder HSSA-I eingesetzt werden. Eine Erweiterung des Energiewandlers (HSSA-E) mit einem integrierten Sensor ergibt den HSSA-EIS. Eine zusätzliche Erweiterung um einen Energiesteller 19 (Verstärker) führt zum HSSA-A, die weitere Integration eines Reglers 18 sowie einer Fehlererkennung 21 führt zum HSSA-I.

Jedes der redundant vorhandenen HSSA-I besteht neben dem HSSA-E (Elektromagneten) aus einem Regler 18, einem Energiewandler-Teil 3 (s. Fig. 1a), dem Abstands- bzw. Positionssensor 11 (s. Fig. 2) sowie weiteren Sensoren samt Signalaufbereitungselektronik 20, einer Fehlererkennung 21, einer Deaktivierungseinheit 22 und einem Netzteil 23. Weiters ist (zumindest) ein Prozessleitrechner 24 vorgesehen.

Die Energieversorgung der Submodule 7 kann über Stromversorgungen erfolgen, wie sie an sich Stand der Technik für zuverlässige Systeme sind. Separate Stromversorgungen für jedes Submodul 7 ergeben die höchste Zuverlässigkeit. Jeweils eine Stromversorgung für mehrere Submodule 7 einzusetzen, reduziert die Investitionskosten und den Platzbedarf, aber auch die Gesamtzuverlässigkeit des Systems, da bei Ausfall einer Stromversorgung gleich mehrere Submodule 7 ausfallen.

Der - oder, für Redundanz, mehrere - Prozessleitrechner 24 wird/werden nur zur bewusst sehr begrenzten Steuerung und Datenverarbeitung und -visualisierung benötigt. Die Kommunikation zwischen dem (jeweiligen) Prozessleitrechner 24 und den Submodulen 7 erfolgt vorteilhafterweise mittels eigener Lichtwellenleiterverbindungen 25 zwischen dem Prozessleitrechner 24 und jedem Submodul 7 mit einem zuverlässigen Protokoll, wodurch eine vollständige (galvanische) Entkopplung der Submodule 7 gesichert wird. Damit ist gewährleistet, dass auch bei Ausfall von einem Submodul 7 (oder mehreren Submodulen 7) oder des Prozessleitrechners 24 die Lagerfunktion aufrecht erhalten bleibt.

Der Prozessleitrechner 24 kann nur den Befehl zum Schweben bzw. langsamen Absetzen des Magnetlagers geben und in gewissen Grenzen den Submodulen 7 neue Regelparameter übergeben. Die Submodule 7 können dem Prozessleitrechner 24 aktuelle Regelgrößen und Signale übermitteln, die in weiterer Folge zur Prozessvisualisierung sowie zur Maschinendiagnose eingesetzt werden können.

Die einzelnen Submodule 7 ergeben eine vollständig dezentrale Reglerstruktur, wobei zur Unterbindung von Fehlerfortpflanzung keine Kommunikation zwischen den einzelnen Submodulen 7 vorhanden ist. Die untereinander magnetisch entkoppelten und im Betrieb austauschbaren Elektromagnete 17 bilden gemeinsam den Stator des Magnetlagers, welcher die Lagerkräfte auf den Rotor 2 ausübt.

Ein Submodul 7 ist hierbei jeweils für die Regelung des Strukturabstandes in Richtung "seines/seiner" Elektromagneten 17 zuständig (es kann für einige Anwendungen auch sinnvoll sein, dass ein Submodul 7 mehrere Elektromagnete 17 aufweist). Mittels des im Submodul 7 integrierten Abstands- bzw. Positionssensors 11 wird der Abstand der zu lagernden Struktur von Elektromagneten 17 des Submoduls 7 erfasst und mittels der von der Regeleinheit 18 durchgeführten Lageregelung (z.B. PID-Lageregler mit unterlagertem Proportionalstromregler) die Stellgröße für den Elektromagneten 17 ermittelt und über den Leistungsverstärker ausgegeben.

Wird beispielsweise der Abstand zwischen dem Abstands- bzw. Positionssensor 11 und der zu lagernden Struktur (Rotor 2) größer als der Sollabstand, so wird der Strom durch den/die Elektromagneten 17 des Submoduls 7 so weit nachgeführt, bis die Struktur wieder den Sollabstand erreicht hat.

Alternativ kann auch der magnetische Fluss erfasst und als Basis für die Regelung verwendet werden.

Eine vollständig dezentrale Regelung der Gesamtstruktur ist möglich, da jedes Submodul 7 den Abstand der zu lagernden Struktur 2 in die Richtung "seiner" Summenkraft auf die zu lagernde Struktur 2 misst.

Bei der Inbetriebsetzung des Aktorsystems 1 wird beispielsweise wie folgt vorgegangen:

1. an das Netz zuschalten aller Submodule 7 mittels lokaler mechanischer Sicherungs- oder Netzschalter

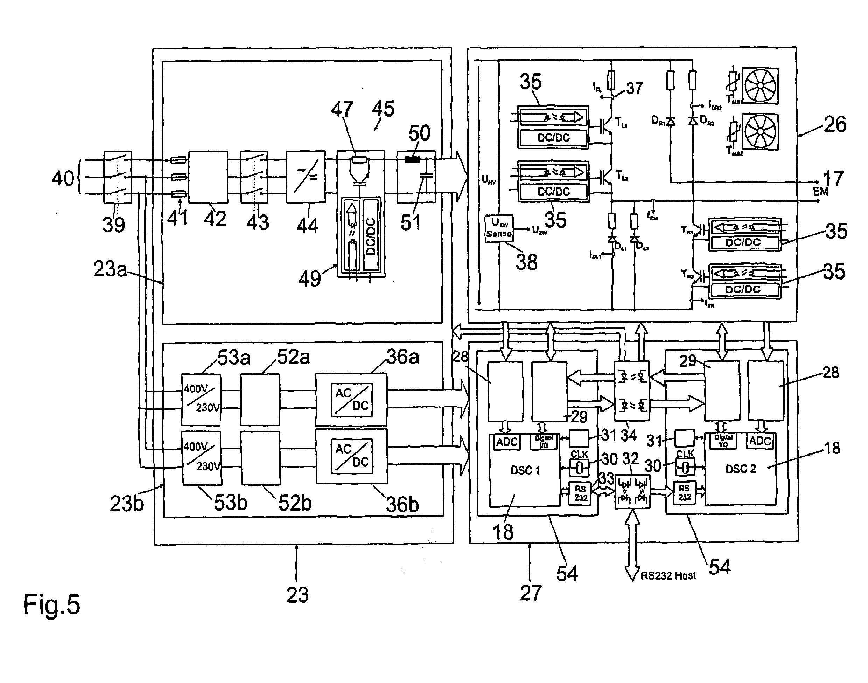

2. Signalverarbeitungseinheiten 54 (s. Fig. 5) starten; sie führen einen Selbsttest und einen gegenseitigen Start-up-Funktionstest aus

3. bei einem positiven Funktionstest erfolgt ein Softstart eines Leistungsnetzteil-Schaltverstärkers 26 (s. Fig. 5)

4. Funktionstest des Leistungsnetzteil-Schaltverstärkers 26

5. bei einem positiven Funktionstest des Schaltverstärkers 26 wird sodann auf einen Befehl "Lagerung EIN" vom Prozessleitrechner 24 gewartet

6. Soft-Start des Schaltverstärkers 26 mit langsamer Erhöhung des Ausgangsstroms auf einen von der Regeleinheit 18 vorgegebenen Wert (dadurch lassen sich Änderungen der Lage der zu lagernden Struktur 2 im Zuge der Aktivierung eines Submoduls 7 vermeiden, weil die Regeleinheit 18 der übrigen Submodule 7 die Änderung der auf den Rotor 2 einwirkenden Gesamtkraft leicht ausregeln können)

7. volle Funktion des jeweiligen Submoduls 7.

Ein negativer Funktionstest führt jeweils zur Deaktivierung des betroffenen Submoduls 7.

Tritt in einem Submodul 7 ein Defekt auf, wird dieser durch dessen lokale Fehlerdetektionseinheit 21, die ebenfalls während des Betriebs auf ihre Funktion überprüft wird, detektiert, woraufhin sich das Submodul 7 automatisch abschaltet und inaktiv wird.

Hierbei erfolgt eine Deaktivierung der Ansteuerung des Energiewandlers auf mehrfache Weise:

1. Abschaltung der Leistungshalbleiter des Schaltverstärkers 26. Diese Abschaltfunktion wird laufend im Betrieb getestet.
2. Trennung des Netzteils des Schaltverstärkers 26 vom Netz.
3. Fehlermeldung an den Prozessleitrechner 24 (falls Regler und Kommunikation mit Leitrechner OK; andernfalls erkennt der Prozessleitrechner 24 den Ausfall der Kommunikation mit dem Leitrechner und somit des Submoduls 7) und Deaktivierung der kompletten Submodul-Steuer- und Regelelektronik.

Die unterschiedlichen Wirkmechanismen zur Deaktivierung lassen mit Sicherheit eine Deaktivierung der Ansteuerung des Energiewandlers erzielen. Die redundanten Submodule 7 halten in der Folge die Lagerfunktion aufrecht. Der ungestörte Weiterbetrieb aller noch funktionierenden Submodule wird durch die vollständige Entkopplung zwischen den Submodulen 7 gewährleistet.

Ein Fehler in einem Submodul 7 führt zu folgendem Ablauf:

1. Der Fehler wird im Submodul durch dessen lokale Fehlerdetektionseinheit 21 erkannt.
2. Deaktivierungssequenz des defekten Submoduls.
3. Rotormittelpunkt im Lager beginnt Positions- und Geschwindigkeitsänderung durchzuführen (aufgrund des Wegfalls der Lagerkraft des defekten und deaktivierten Submoduls 7).
4. Erfassung der Positions- und Geschwindigkeitsänderung des Rotormittelpunkts im Lager durch alle funktionierenden aktiven Submodule 7 mittels deren Abstands- bzw. Positionsmessung.
5. Die Abweichungen von der Solllage des Rotors 2 führen zu einer Reaktion aller aktiven Submodule 7, so dass der Rotormittelpunkt wieder in die Mittellage (abgesehen von Fertigungsimperfektionen) gezogen wird.
6. Entnahme des defekten Submoduls 7 und Einbau eines funktionierenden Submoduls 7 während des Betriebs des Aktorsystems 1 (Hot-Swap).
7. Soft-Start des neu eingesetzten Submoduls 7.
8. Normaler Betrieb mit höchster Zuverlässigkeit wieder gewährleistet.

Die Lagerfunktion mittels der noch funktionierenden Submodule 7 ist, obwohl jedes Submodul 7 eine unabhängige Regeleinheit 18 aufweist (dezentrale Regelung), somit dadurch gewährleistet, dass sich aufgrund des Ausfalls eines Submoduls/mehrerer Submodule die Gesamtkraft auf die zu lagernde Struktur ändert und die Struktur (Rotor 2) somit eine Änderung der Lage bzw. der Geschwindigkeit erfährt. Aufgrund der Lageregelung erfolgt eine Reaktion aller aktiven Submodule 7, womit eine Rückführung der zu lagernden Struktur in die Solllage erfolgt.

Auch ein Austausch von funktionierenden Submodulen ist im Betrieb möglich, damit ist unabhängig vom Betriebszustand eine hohe Zuverlässigkeit über die komplette Betriebszeit hinweg erzielbar.

Abhängig von der gewünschten Zuverlässigkeit und den Anforderungen an die Dimensionierung, wie z.B. die erforderliche Kraft und die zulässige Baugröße, kann die Anzahl der Submodule 7, und damit auch der Energiewandler, gewählt werden. Die hierbei notwendige Überdimensionierung bei den Submodulen 7 hat im fehlerfreien Betrieb unter anderem den Vorteil, dass die Komponenten geringer beansprucht werden und von daher schon eine Erhöhung der mittleren ausfallfreien Zeit ("mean time to failure", MTTF) der einzelnen Submodule 7 erfolgt.

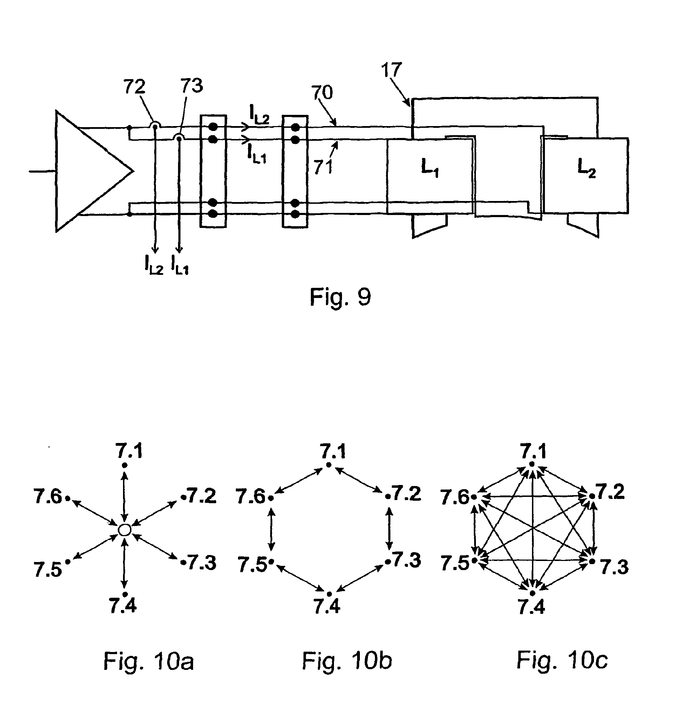

Durch die Wahl der Anzahl der Submodule 7 stellt das System auch für Anwendungen, die eine geringere Zuverlässigkeit benötigen, eine wirtschaftliche Lösung dar. Die magnetische Entkopplung bewirkt, dass keine (bedeutenden) Nebenflüsse zu anderen Polen der Magnetlagerrichtung auftreten können, wodurch einerseits im Fehlerfall einer Endstufe eine einfachere Deaktivierung möglich ist und andererseits das weiter unten anhand von Fig. 9 beschriebene, zur Funktionsüberprüfung des Abstands- bzw. Positionssensors 11 eingesetzte Self-Sensing möglich wird.

Bei konventionellen Magnetlagern mit nur einem Abstands- bzw. Positionssensor pro Achse führen Rotortemperaturänderungen aufgrund der Temperaturdehnung des Rotors und des damit veränderten Abstands zwischen Rotor und Abstands- bzw. Positionssensor zu einer Veränderung der Rotormittenposition. Abhilfe schafft in diesem Fall eine Differenzialanordnung von zwei Abstands- bzw. Positionssensoren je Achse.

Beim hier vorgestellten magnetischen Aktor kommt es bei einer Rotortemperaturänderung zu einer geringfügigen Änderung der Abstands- bzw. Positionssensorsignale aller Submodule 7. Dadurch kommt es zu keiner Positionsänderung des Rotormittelpunktes, sondern nur zu einer (geringfügigen) Änderung der Lagergrundsteifigkeit des Aktorsystems 1. Eine Rotortemperatur unter Nenntemperatur führt aufgrund erhöhter Anzugskräfte aller Submodule 7 zu einer etwas höheren Lagergrundsteifigkeit, eine Rotortemperatur über Nenntemperatur führt zu einer etwas geringeren Lagergrundsteifigkeit.

In Fig. 5 ist ein Ausführungsbeispiel der elektronischen Schaltung eines Submoduls 7 dargestellt. Mit dem gezeigten Aufbau wird jeder "Single Point of Failure" vermieden. Im Wesentlichen besteht die Schaltung aus drei Funktionsblöcken, nämlich: (1) der Regelung und Fehlererkennung 27, bestehend aus zwei Signalverarbeitungseinheiten 54 mit sog. "Digital Signal Controllern"(DSC1 und DSC2) als Regeleinheiten 18, die die Regelung und Fehlererkennung ausführt, (2) dem Schaltverstärker 26 zur Ansteuerung des/der Elektromagneten 17 und (3) dem Netzteil 23, unterteilt in das Leistungsnetzteil 23a für die Versorgung des Schaltverstärkers 26 sowie die Netzteile 23b für die beiden Regeleinheiten 18 der Signalverarbeitungseinheiten 54.

Es ist sowohl eine galvanische Trennung zwischen dem Leistungsteil (Leistungsnetz-Teil 23a + Schaltverstärker 26) und der Regelung und Fehlererkennung 27 als auch zwischen den zwei Signalverarbeitungseinheiten 54 und somit den Regeleinheiten 18 (jeweils Niederspannungsnetzteil 23b + DSC1 bzw. DSC2) vorhanden.

Die Regelung und Fehlererkennung 27 weist zwei vollständig unabhängig arbeitende und spannungsversorgte digitale Signalverarbeitungseinheiten 54 als Regeleinheiten 18 (DSC) auf. Diese DSC 18 weisen die Funktion von digitalen Signalprozessoren (DSP) auf, die neben digitalen Ein- und Ausgängen diverse zusätzliche Schnittstellen aufweisen, wie z.B. Analog-Digital-Konverter (Analog-to-digital-Converter, ADC), Pulsweitenmodulatoren, RS232 und Hochgeschwindigkeits-Schnittstellen, Timer/Counter etc.

In den Signalverarbeitungseinheiten 54 werden die analogen Sensorsignale bei 28 den ADC der Regeleinheiten 18 über Anti-Aliasing-Filter und Pegelkonverter und -begrenzer zugeführt, die digitalen Signale, s. Puffer 29, werden jeweils mittels Treiber-Bausteinen entkoppelt. Jede der beiden DSC-Regeleinheiten 18 verfügt über einen eigenen CPU-Taktgenerator 30 sowie einen Watchdog 31 (Überprüfung des grundsätzlichen Programmablaufs). Die Kommunikation zum Prozessleitrechner (Host-PC) (24 in Fig. 4) erfolgt von der ersten Regeleinheit 18 (DSC 1) aus mittels einer bei 32 galvanisch getrennten RS232-Schnittstelle 33. Die zweite Regeleinheit 18 (DSC2) liest sowohl die vom Prozessleitrechner 24 gesendeten Daten als auch die von der ersten Regeleinheit 18 (DSC1) an den Prozessleitrechner 24 gesendeten Daten für eine Fehlererkennung der Kommunikation. Auch eine Deaktivierung der Kommunikation zum Prozessleitrechner 24 ist von der zweiten Regeleinheit 18 (DSC2) möglich. Damit kann dieser einen Defekt des Submoduls 7 mitteilen (Kommunikation "tot" = Submodul defekt).

Weiters ist eine serielle Hochgeschwindigkeitsdatenübertragung mit galvanischer Trennung über Optokoppler 34 zwischen den Signalverarbeitungseinheiten 54 implementiert, die zur Übertragung des jeweiligen Systemstatus, der Reglerstellgröße, etc. dient. Diese Kommunikation wird zur Fehlererkennung zwischen den Regeleinheiten 18 (Inter-DSC-Fehlererkennung) eingesetzt.

Für eine möglichst hohe Zuverlässigkeit läuft auf den Regeleinheiten 18 unterschiedliche Software, idealerweise von unterschiedlichen Gruppen programmiert (Code Diversity). Eine weitere Erhöhung der Zuverlässigkeit ergibt sich durch Implementierung der DSC in hardwaretechnisch unterschiedlichen Ausführungsformen z.B. DSC1, DSC2 mit integrierten Bausteinen unterschiedlicher Bauart, etc.

Funktionalität von DSC1:
Regler, Self-Sensing, Fehlererkennung von DSC2, Submodul-Deaktivierung

Funktionalität von DSC2:
Fehlererkennung des Schaltverstärkers, des Leistungsnetzteils, DSC1, der Kommunikation, der Submodul-Deaktivierung.

Eine spezielle Topologie des Schaltverstärkers 26 ermöglicht zum einen eine vollständige Funktionsüberprüfung aller seiner Bauelemente im laufenden Betrieb und zum anderen auch das sichere Deaktivieren, selbst bei Auftreten von Bauteilfehlern, z.B. bei einem Kurzschluss in einem Leistungshalbleiterschaltelement. Da bei rein aktiven Magnetlagern (ohne Permanentmagnete) nur eine Stromrichtung erforderlich ist (die Magnetkraft ist proportional dem Quadrat des Laststroms durch den Elektromagneten, $F - I^2$), findet hier eine 2-Quadranten-Schaltverstärker-Schaltung Verwendung.

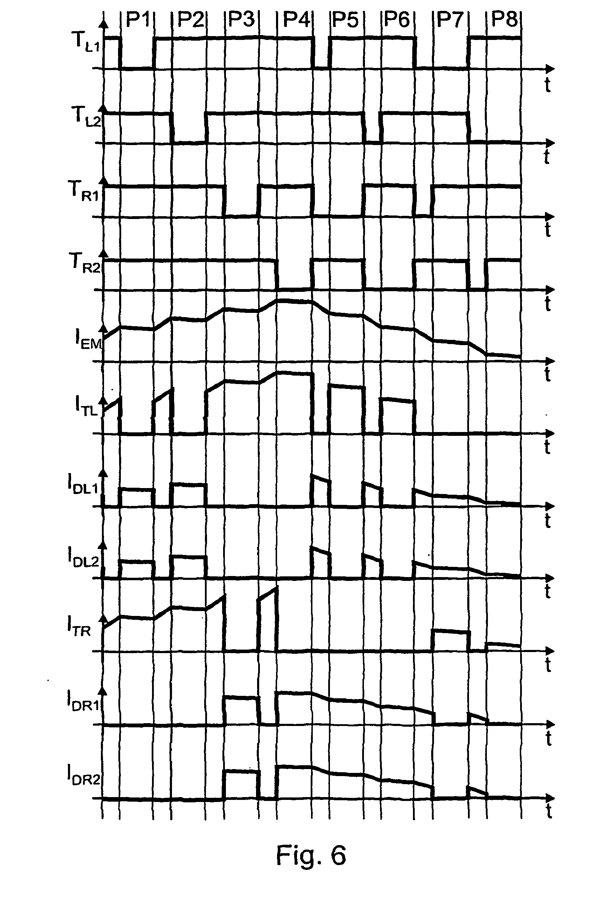

Im Gegensatz zur Standardschaltung von Schaltverstärkern, mit je einem Schalttransistor und je einer Freilaufdiode je Halbbrückenzweig, sind bei der gezeigten Ausführungsform zwei Schalttransistoren $T_{L1}$, $T_{L2}$ bzw. $T_{R1}$, $T_{R2}$ in Serie und zwei Freilaufdioden $D_{L1}$, $D_{L2}$ bzw. $D_{R1}$, $D_{R2}$ über Serienwiderstände parallel geschaltet. Durch die Serienschaltung der Schalttransistoren und einer speziellen Ansteuerung (s. Fig. 5) ist zum einen die Abschaltung des Transistorzweigs selbst bei einem Kurzschluss eines der beiden Transistoren möglich, weiters ist eine vollständige Funktionsüberprüfung im Betrieb möglich und zusätzlich erfolgt eine Reduktion der Belastung der Schalttransistoren, da ein Schalttransistor nicht jede Pulsweitenperiode umschalten muss, wodurch die Schaltverluste reduziert werden (und damit die Lebensdauer verlängert wird). Ein Beispiel für ein je nach Vorzeichen der Aussteuerung erforderliches Pulsmuster für die Transistoren $T_{L1}$, $T_{L2}$ der linken Halbbrücke bzw. die Transistoren $T_{R1}$ und $T_{R2}$ der rechten Halbbrücke ist samt daraus resultierenden Stromverläufen in der Last ($I_{EM}$) und in den Leistungsschaltelementen ($I_{TL}$, $I_{DL1}$, $I_{DL2}$, $I_{TR}$, $I_{DR1}$, $I_{DR2}$) in Fig. 6 dargestellt.

Hierbei werden je nach Vorzeichen der Aussteuerung P1 oder P5, danach P2 oder P6 etc. bis P4 oder P8 und danach wieder P1 oder P5 etc. zyklisch durchlaufen. Auch andere Ansteuer-Reihenfolgen können implementiert werden, z.B. optimiert auf eine Reduktion der Schaltvorgänge.

Die Parallelschaltung von zwei Diodenzweigen ermöglicht den Abbau des Spulenstroms $I_{EM}$ über Freilaufdioden, auch wenn eine der parallel geschalteten Freilaufdioden $D_{L1}$, $D_{L2}$ bzw. $D_{R1}$, $D_{R2}$ eine Unterbrechung aufweist. Damit ist sichergestellt, dass kein Spannungsüberschlag an undefinierter Stelle aufgrund einer hochohmigen Freilaufdiode entsteht, der unabsehbare Folgen auch für die Funktion aller übrigen Submodule haben könnte. Die in Serie zu den Freilaufdioden liegenden Widerstände (in Fig. 5 ohne Bezeichnung) dienen dazu, auch bei unterschiedlichen elektrischen Parametern der Freilaufdioden D eine weitestgehend gleichmäßige Stromaufteilung auf die beiden parallel geschalteten Diodenzweige zu erzielen.

Für eine 4-Quadranten-Ansteuerung ist die Schaltungstopologie sinngemäß zu erweitern, d.h.: Je Viertelbrücke zwei Schalttransistoren in Serie und zu dieser Serienschaltung parallel die oben beschriebene Parallelschaltung zweier Freilaufdioden (mit Lastausgleichswiderständen).

Die Ansteuerung der Leistungstransistoren (z.B. Insulated Gate Bipolar-Transistoren, IGBT) erfolgt mittels Opto-Gatetreibern 35, die mittels Optokoppler eine galvanische Trennung zwischen Leistungskreis und Ansteuerkreis ermöglichen. Die Stromversorgung der Sekundärseite der Optokoppler samt Treiberstufen zur Gateansteuerung erfolgt mittels DC/DC-Wandlern aus den DSC-Netzteilen 23b. Hierbei werden die Gatetreiber 35 der linken Halbbrücke in Fig. 5 aus dem Netzteil 36a von DSC1 versorgt und die Gatetreiber 35 der rechten Halbbrücke aus dem Netzteil 36b von DSC2. Damit ist ein Ausfall der Versorgungsspannung von jedem der beiden DSC-Netzteile 36a, 36b auch aus der nicht mehr gegebenen Funktion der Schalttransistoren ersichtlich.

In den einzelnen Transistor- und Diodenzweigen eingesetzte Stromsensoren, z.B. 37, arbeiten nach dem Kompensationsprinzip und bieten ebenfalls eine galvanische Trennung zwischen Leistungskreis und Reglerseite. Hier sind auch Sensoren mit anderen Funktionsprinzipien (GMR-Sensoren etc.) möglich. Für die Messung des Laststroms $I_{EM}$ werden höhere Anforderungen an die Genauigkeit gestellt, da diese zur Stromregelung und für Self-Sensing (zur Fehlererkennung oder Regelung, wie nachfolgend erläutert) benötigt werden, als bei den Zweig-Stromsensoren. Letztere haben höhere Anforderungen an die obere Grenzfrequenz. Ein Spannungssensor 38 zur Erfassung der Zwischenkreisspannung $U_{HV}$ ist als Isolationsverstärker ausgeführt und bietet damit ebenfalls eine galvanische Trennung zwischen Leistungskreis und Reglerseite.

Das Netzteil 23 wird mittels eines 3-Phasen-Sicherungsautomaten oder dreiphasiger Netzschalter 39 mit dem 3-Phasen-Netz 40 verbunden. Der Sicherungsautomat oder Netzschalter 39 ist mit einer mechanischen Verriegelung des Submoduls 7 gekoppelt, so dass nur ein deaktiviertes Submodul 7 aus dem System herausgenommen oder in dieses eingesetzt werden kann. Damit werden undefinierte Zustände der Elektronik sowie eine starke Beanspruchung der elektrischen Steckkontakte aufgrund von Lichtbogenbildung und Stromspitzen vermieden.

Nach Sicherungen 41 und einem Netzfilter 42 folgt ein Opto-Relais 43, das von den DSC 18 aktiviert wird und das Ein- bzw. Ausschalten des Leistungsnetzteils 23a ermöglicht. Nach einer Vollweggleichrichtung mit Hilfe eines Dreiphasen-Gleichrichters 44 folgt eine Softstart-Schaltung 45, um den Ladestrom von nachfolgenden Zwischenkreiskondensatoren 51 zu begrenzen.

Die Softstart-Schaltung 45 besteht im Wesentlichen aus Leistungswiderständen 47, die, sobald die Zwischenkreiskondenstoren geladen sind, mittels eines Schaltelements (z.B. Leistungstransistor 48 inkl. Gate-Ansteuerung 49) überbrückt werden.

Vor den Zwischenkreiskondensatoren, z.B. 51, ist zur Reduktion der Ladestromspitzen eine Induktivität 50 vorhanden. Die Zwischenkreiskondensatoren 51 selbst sind als Serien-Parallelschaltung mit jeweils einem (hochohmigen) Leistungswiderstand (nicht dargestellt) parallel zu jedem Zwischenkreiskondensator zum Spannungsausgleich zwischen den in Serie geschalteten Kondensatoren ausgeführt. Die Serienschaltung zweier Zwischenkreiskondensatoren ermöglicht, falls einer der beiden Kondensatoren einen Kurzschluss oder niederohmiges Verhalten aufweist, ein Weiterfunktionieren ohne exzessivem Eingangsstrom vom Netz 40. Die Parallelschaltung der Kondensatoren ermöglicht es, dass eine Rückspeicherung der Energie von der induktiven Last zu keinem extremen Anstieg der Zwischenkreisspannung $U_{HV}$ führt, selbst wenn einer der Kondensatoren eine Unterbrechung aufweist oder hochohmig wird, was in der Folge eine Zerstörung weiterer Bauteile nach sich ziehen könnte.

Das Netzteil 23b für die Regelung und Fehlererkennung 27 besteht aus je einem Netzfilter 52a, 52b, das einem Spannungswandler bzw. Tranformator 53a, 53b nachgeschaltet ist, und jeweils einem galvanisch getrennten AC/DC-Wandlermodul 36a bzw. 36b je Signalverarbeitungseinheit 54.

Alle Verbindungen zum Submodul sind vorteilhafterweise direkt ausgeführt, ohne dass beispielsweise eine Bus-Leiterplatte mehreren Submodulen gemeinsam ist. Damit ist sichergestellt, dass auch alle Verbindungsleitungen (Netzzuleitung, Leitung zwischen einem ohne Elektronik ausgeführten Submodul und der zugehörigen Elektronik, Kommunikation zum Prozessleitrechner 24, etc.) im Betrieb austauschbar sind und somit ein unterbrechungsfreier Betrieb aller übrigen Submodule auch für diesen Fall sichergestellt ist.

Nachfolgend soll nun die Funktionsüberprüfung/Fehlerdetektion/automatische Deaktivierung kurz erläutert werden.

Alle Teilsysteme eines jeden Submoduls 7 sind so ausgeführt, dass eine vollständige Funktionsüberprüfung aller Komponenten im laufenden Betrieb, eine Trennung von der Last im Fall eines Fehlers und eine Überprüfung der Funktionalitäten im Betrieb ohne Beeinflussung der Lagerkraft ermöglicht wird.

Die Fehlerdetektionseinheit überprüft fortwährend die korrekte Funktion aller Funktionsblöcke eines Submoduls, wobei für die jeweilige Funktionalität aussagekräftige Signale der Baugruppen überprüft werden, so dass sichergestellt werden kann, dass das komplette Submodul vollständig funktionstüchtig ist. Ein detektierter Fehler am Submodul hat die automatische Deaktivierung dieses Submoduls zur Folge. Bei der Aktivierung eines Submoduls erfolgt zunächst ein Start-Up-Test, um, wo es möglich ist, die Funktionalität des Submoduls zu testen, noch bevor der Prozess durch das aktivierte Submodul beeinflusst wird.

Die lokale Fehlererkennung ist hierbei vorteilhafterweise in zwei unabhängig voneinander arbeitenden Bausteinen/Baugruppen implementiert, die auch aus unabhängig voneinander arbeitenden Netzteilen versorgt werden. Die Durchführung der Fehlererkennung kann beispielsweise modellbasiert (z.B. Brückenspannung, Laststromverlauf, Elektromagnet) oder mittels Vergleich redundanter Komponenten erfolgen. Eine vorteilhafte Realisierungsmöglichkeit ist es, die Fehlererkennung in 27 zu implementieren und dessen Funktionalität mittels beispielsweise zweier Regeleinheiten, d.h. digitaler Signal-Controllern DSC1 und DSC2 mit Hilfe von vergleichenden Operationen zu überprüfen, vgl. Fig. 5. Im Hinblick auf diese bevorzugte Ausführung wird das Bezugszeichen 27 auch zu Bezeichnung der Fehlerdetektionseinheit verwendet.

Ablaufgesteuerte Elemente, wie typische Prozessoren, sind einfacher auf deren Grundfunktionalität zu überprüfen als programmierbare Logikbausteine (z.B. CPLD-Bausteine, "complex programmable logic device"), da bei ersteren schon das programmgemäße Toggeln eines Pins mittels eines einfachen Watchdogs eine Überprüfung der Grundfunktionalität des Programmablaufs ermöglicht.

Die gegenseitige Überprüfung der DSC 18 erfolgt mittels bekannter Konzepte zur Prozessorüberwachung.

Die Funktionsüberprüfung des Schaltverstärkers 26 erfolgt durch den Vergleich der Transistor- und Diodenstromsensor-Istsignale mit den in Fig. 6 dargestellten, für den jeweiligen Schaltzustand erwarteten Signalen. Weichen diese jeweils zu stark voneinander ab (außerhalb des "Toleranzschlauchs" um den erwarteten Wert), so wird ein Fehler erkannt. Je nach Typ des Fehlers wird daraufhin sofort ein Fehler ausgegeben oder erst nach mehrmaligem Auftreten des Fehlers hintereinander, wodurch eine höhere Robustheit gegenüber äußeren Störungen erzielt wird.

Da beispielsweise die Stromsensoren im Schaltverstärker 26 von unterschiedlichen Netzteilen 36a, 36b versorgt und von unterschiedlichen DSC 18 (DSC1, DSC2) erfasst werden, werden durch einen Vergleich auch Fehler in den jeweiligen Sensormessketten (Stromsensor, Operationsverstärker, ADC etc.) zuverlässig erkannt.

Die Überprüfung des Leistungsnetzteils 23a erfolgt mittels Messung der Zwischenkreisspannung $U_{HV}$ und mittels Vergleich mit den einzelnen Spannungen der in Serie geschalteten Zwischenkreiskondensatoren 51, die etwa die halbe Zwischenkreisspannung ($U_{HV}/2$) aufweisen müssen.

Die Überprüfung der DSC-Netzteile 36a, 36b erfolgt über den gegenseitigen Funktionstest der DSC 18 sowie der Funktion des betreffenden Submoduls 7.

Die Überprüfung des Abstands- bzw. Positionssensors 11 erfolgt mittels Self-Sensing, wobei auch hier eine zu starke Abweichung, voneinander zur Detektion eines Fehlers führt. (Unter Self-Sensing versteht man die Ermittlung des Luftspalts aus dem Ansteuersignal einer Induktivität (des Energiewandlers, Elektromagnet)).

Zur Erläuterung der Funktionsüberprüfung werden nachfolgend einige charakteristische Beispiele angegeben:

- Fehlererkennung des Elekromagneten 17:

    1. Überprüfung, ob der Laststrom $I_{EM}$ kleiner als der zulässige Maximalstrom des Systems ist. Trifft das nicht zu, liegt ein Fehler vor.
    2. Mittels einfacher Modellrechnung wird in DSC1 aus dem mittels Abstandssensor 11 bestimmten Luftspalt die Induktivität des Elektromagneten 17 und der damit aufgrund der Pulsweite und des Pulsmusters erwartete Stromverlauf $I_{EM}^*$ errechnet. Der erwartete Stromverlauf $I_{EM}^*$ wird mit einem Toleranzschlauch $\pm\Delta$ versehen, und es wird nachfolgend geprüft, ob der Laststrom $I_{EM}$ sich innerhalb des Toleranzschlauchs befindet. Liegt dieser außerhalb, liegt ein Fehler vor.

- Fehlererkennung des Abstands- bzw. Positionssensors 11:

    Der gemessene Abstands- bzw. Positionssensor-Signalverlauf *Pos* muss innerhalb des mittels Self-Sensing aus dem Laststromverlauf $I_{EM}$, der Zwischenkreisspannung $U_{HV}$, etc. errechneten Abstands- bzw. Positionsverlaufs *Pos\**, versehen mit einem Toleranzschlauch $\pm\Delta$, liegen.

- Fehlererkennung der Freilaufdioden (Annahme: Das Vorzeichen aller Halbleiterströme in Flussrichtung der Halbleiter ist positiv, das Vorzeichen des Lastsroms ist ebenfalls positiv):

    1. Dioden sollten sperren (der Zeitbereich ist für jede Halbbrücke aufgrund der Pulsweite und des Pulsmusters bekannt): Dieser Fehler lässt sich gleichzeitig mit der Transistorleitfunktionsüberprüfung durchführen: Wenn der Transistorstrom der linken bzw. rechten Halbbrücke ($I_{TL}$ bzw. $I_{TR}$) innerhalb des Toleranzschlauchs $\pm\Delta$ um den Laststrom $I_{EM}$ liegt, sind die Diodenströme alle vernachlässigbar klein. Ist das nicht der Fall, liegt ein Fehler vor.
    2. Dioden sollten leiten (der Zeitbereich ist für jede Halbbrücke ebenfalls aufgrund der Pulsweite und des Pulsmusters bekannt): Die Dioden $D_{L2}$ und $D_{R2}$ weisen keinen eigenen Stromsensor auf, da sie sich aus $I_{EM}$, $I_{DL1}$ oder $I_{DR1}$ sowie den Transistorzweigströmen $I_{TL}$ und $I_{TR}$ folgendermaßen berechnen lassen:

$$I_{DL2} = I_{EM} - I_{TL} - I_{DL1}$$

$$I_{DR2} = I_{EM} - I_{TR} - I_{DR1}$$

Wenn nun der Transistorstrom der jeweiligen Halbbrücke $I_{TL}$ bzw. $I_{TR}$ unterhalb einer unteren Schranke für den Sperrbetrieb (etwas über Null, beispielsweise 0,5A, damit auch Störungen und Sensorrauschen zu keinem irrtümlichen Abschalten führen) liegt, gilt folgende Vereinfachung (andernfalls wird ein Transistorfehler erkannt):

$$I_{DL2} = I_{EM} - I_{DL1}$$

$$I_{DR2} = I_{EM} - I_{DR1}$$

Nun muss gelten: $I_{DL1} \pm \Delta = I_{DL2} \pm \Delta = I_{EM}/2$ bzw. $I_{DR1} \pm \Delta = I_{DR2} \pm \Delta = I_{EM}/2$, andernfalls liegt ein Diodenfehler vor. Da die Zweigströme von DSC2 ermittelt werden, $I_{EM}$ aber von DSC1 ermittelt wird, werden damit auch alle Fehler in der Signalkette inkl. Analog-Digital-Konverter, Filter, etc. der Regelung- und Fehlererkennung erfasst.

- Abschaltfunktion des Schaltverstärkers 26 mittels DSC1 und DSC2:

  Die zwei in Serie liegenden Schalttransistoren ermöglichen, dass

- in Verbindung mit der speziellen Ansteuerung - eine vollständige Überprüfung der Funktionalität der Leistungshalbleiter des Schaltverstärkers 26 samt Ansteuerung und Stromsensoren inkl. Signalverarbeitung (ADC) durchgeführt werden kann.

Im Sperrzustand eines Transistorzweiges wird jeweils nur einer der in Serie liegenden Schalttransistoren ausgeschaltet, wodurch ein Funktionstest der Abschaltfunktion des zweiten Schalttransistors möglich ist.

Jeweils mit etwas Verzögerung nach dem Abschalten eines Schalttransistors durch DSC1 aufgrund der PWM (Pulsweitenmodulation) wird dieser innerhalb des Zeitbereichs, in dem er abgeschaltet sein soll, durch DSC1 wiederum aktiviert, und zwar bis kurz vor dem Ende der jeweiligen PWM-Periode. Innerhalb dieses Zeitbereichs deaktiviert DSC2 den Schalttransistor und überprüft durch Auswertung des zugehörigen Transistorzweigstromes, ob die Abschaltfunktion tatsächlich ausgeführt werden kann. Andernfalls wird ein Fehler erkannt. DSC1 überprüft die Abschaltfunktion mittels der Laststromüberprüfung (s.o. *"Fehlererkennung des* Elektromagneten").

In allen Funktionsblöcken der Submodule sind voneinander unabhängig arbeitende Deaktivierungsmöglichkeiten vorhanden:

- Leistungsnetzteil 23a:

  ○ Sicherungsautomat oder Netzschalter 39 (Überstrom bei Sicherung und manuelle Betätigung, damit nur ein deaktiviertes Submodul ausgetauscht werden kann).
  ○ Opto-Relais 43
  ○ Softstart-Transistor 48 (bei ausgeschaltetem Transistor ist nur ein geringer Ladestrom der Zwischenkreiskondensatoren möglich, was zu einer geringen Zwischenkreisspannung $U_{HV}$ des Schaltverstärkers 26 führt)

- Netzteil 23b für die Signalverarbeitungseinheit 54:

  ○ Watchdog 31 schaltet bei DSC-Fehler die DSC-Betriebsspannung ab

- Schaltverstärker 26:

  ○ Schalttransistoren (mit Not-Aus-Transistorfunktion, s. oben)
  ○ Schmelzsicherung bei Überstrom im Transistorzweig (bei Einsatz von Leistungstransistoren im Schaltverstärker 26 mit Kurzschlussfestigkeit für einige µs kann eventuell darauf verzichtet werden, da die Fehlererkennung rechtzeitig den in Serie liegenden Leistungstransistor abschaltet)

- Signalverarbeitungseinheiten 54:

  ○ Deaktivierung der Schalttransistoren $T_L$, $T_R$ mittels beider DSC 18 möglich.

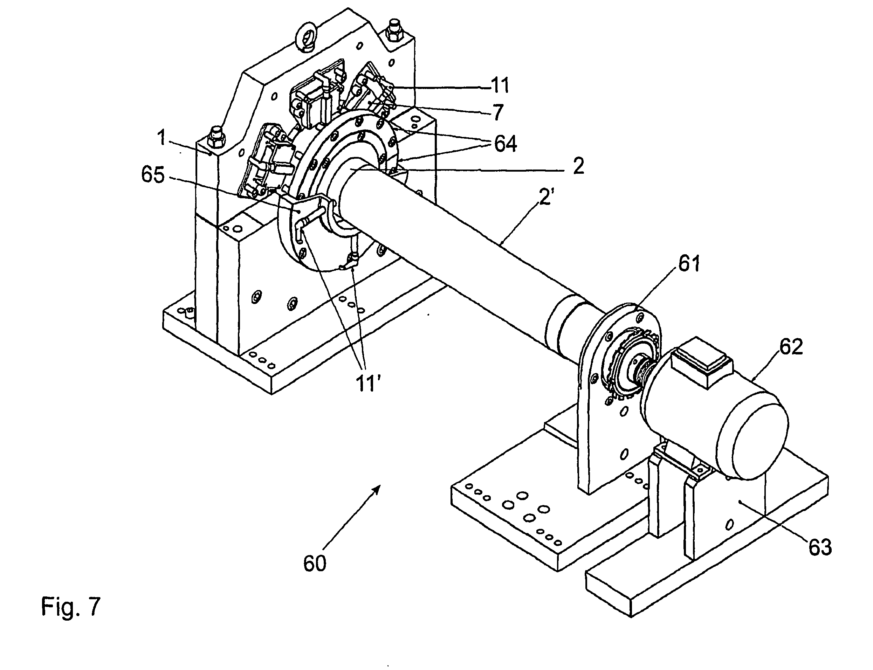

In Fig. 7 ist die mechanische Ausführung eines Rotorversuchsstands 60 mit einem radialen aktiven Magnetlager gezeigt, das die beschriebene Submodul-Technologie benutzt. Dieser Rotorversuchsstand 60 dient zum Test der beschriebenen Submodul-Technologie; er weist ein radiales aktives Magnetlager als Aktorsystem 1 an einem Ende der Welle 2 auf, wobei dieses Magnetlager beispielhaft sechs Submodule 7 aufweist, vgl. auch Fig. 1 und 2; am anderen Wellenende sind ein Kugellager 61 und ein Elektromotor 62 vorhanden, der über eine elastische Kupplung den Rotor 2 antreibt. Der Rotorversuchsstand 60 enthält weiters eine Motorhalterung 63 sowie - am anderen Wellenende - ein Notlager 64. Weiters sind aus Fig. 7 Referenzpositionssensor-Aufnahme 65 mit Referenzabstands- bzw. -positionssensoren 11' sowie lokale Abstands- bzw. Positionssensoren 11 ersichtlich.

Die Fig. 1a zeigt mehr im Detail den Lagermagneten 1 mit den sechs im Betrieb austauschbaren Hubmagnet-Submodulen 7, wobei das obere Hubmagnet-Submodul gerade ausgetauscht wird.

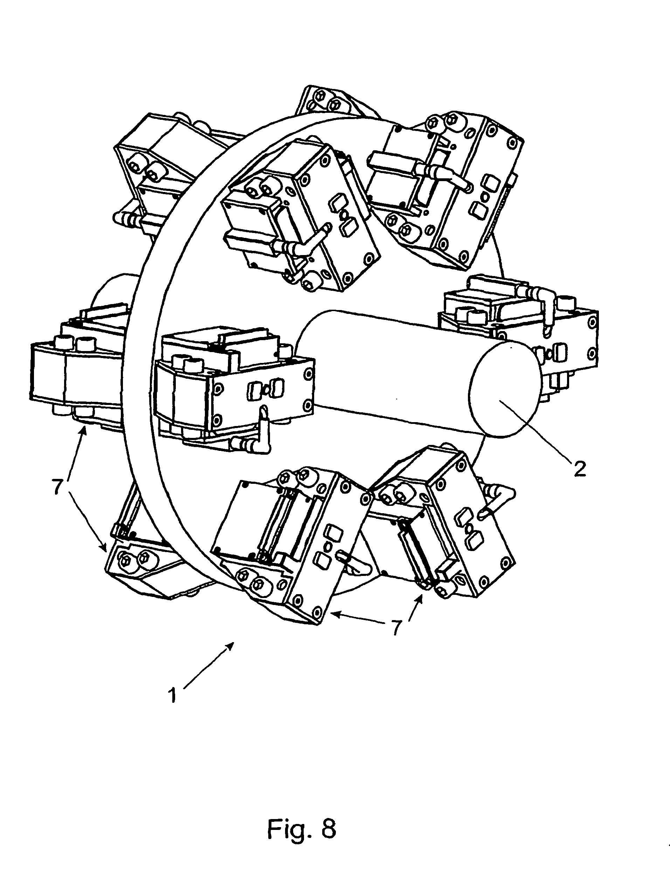

Eine Ausführung des Aktorsystems 1 für eine axiale aktive elektromagnetische Lagerung eines Rotors 2 ist schematisch in Fig. 8 gezeigt. Wieder sind, zur axialen aktiven elektromagnetischen Lagerung des Rotors 2, mehrfach redundante Submodule 7 vorhanden. Wie bei der zuvor im Detail beschriebenen axialen Lagerung des Rotors 2 weist jedes Submodul 7 mindestens zwei unabhängige Einrichtungen zur Abstands- bzw. Positionsbestimmung auf. Die Struktur wird auch hier auf einen vorgegebenen Luftspalt geregelt.

Eine mögliche Ausführungsform der HSSA ist beispielsweise eine komplette Einheit bestehend aus Energiewandler, Energiesteller sowie Regelung und/oder Ansteuerung und/oder Fehlererkennung sowie erforderlicher Sensoren, um sie als ganzes austauschen zu können. Bei einer weiteren Ausführungsform kann die Elektronik unabhängig von den Subeinheiten des Energiewandlers inkl. Abstands- bzw. Positionssensor (HSSA-EIS) ausgetauscht werden.

Weiters sind Ausführungsformen entweder, wie oben beschrieben, mit Abstands- bzw. Positionssensor 11 (industriell für Magnetlager typischerweise eingesetzte Sensoren sind beispielsweise Wirbelstromsensoren, induktive Sensoren oder kapazitive Sensoren) oder ohne expliziten Abstands- bzw. Positionssensor mit Self-Sensing möglich. Für eine zuverlässige Fehlererkennung des Abstands- bzw. Positionssensors 11 kann bei Einsatz eines expliziten Abstands- bzw. Positionssensors 11 vorteilhafterweise Self-Sensing zur Fehlererkennung des Abstands- bzw. Positionssensors eingesetzt werden oder beispielsweise auch mindestens ein weiterer Abstands- bzw. Positionssensor.

Bei Einsatz von Self-Sensing zur Abstands- bzw. Positionsbestimmung für die Regelung ohne expliziten Abstands- bzw Positionssensor ist eine einzelne Ausführung nicht ausreichend, da Fehler damit nur unzureichend erkannt werden können. Beispielsweise kann ein erhöhter übergangswiderstand einer Steckverbindung zum Elektromagneten zu einer Reduktion der Stromanstiegsgeschwindigkeit führen, wodurch ein größerer Luftspalt als tatsächlich vorhanden errechnet wird. Eine Modellierung des mechanischen Systems zur Fehlererkennung mittels Plausibilitätsanalyse ist ohne Kommunikation zwischen den Submodulen auch nicht möglich, da die auf die zu lagernde Struktur (Rotor 2) ausgeübten Kräfte der übrigen Submodule nicht bekannt sind und somit auch eine Simulation des Wellenverhaltens, die als Referenz dienen könnte, nicht möglich ist. Eine Prinzip-Ausführung eines Elektromagneten 17 eines Submoduls 7 mit zwei Ansteuerungen 70, 71, zwei Stromsensoren 72, 73 sowie zwei Wicklungen $L_1$, $L_2$ und zwei Flusspfaden, die zwei unabhängige Self-Sensing-Einrichtungen mit geringem Hardware-Mehraufwand ermöglicht, zeigt Fig. 9. Alternativ sind auch zwei Elektromagnete möglich, die aber räumlich möglichst nahe beieinander angeordnet sein sollten.

Generell sind mindestens zwei voneinander unabhängige Einrichtungen zur Abstands- bzw. Positionsbestimmung auszuführen. Hierbei kann eine Einrichtung (oder für eine höhere Genauigkeit auch mehrere) zur Regelung herangezogen werden und mindestens eine weitere für die Fehlererkennung. Alternativ können die vorhandenen Einrichtungen zur Abstands- bzw. Positionsbestimmung sowohl für die Regelung als auch für die Fehlererkennung (mittels Vergleich der Abweichungen) eingesetzt werden. Wie bereits vorstehend ausgeführt, kann auch eine Bestimmung des magnetischen Flusses über Sensoren und/oder Modellrechnung erfolgen.

Das oben ausführlich beschriebene Ausführungsbeispiel betrifft Submodule mit Redundanz in radialer Richtung (statt der für die grundsätzliche radiale magnetische Lagerung erforderlichen drei Elektromagnete sind sechs Submodule 7 um den Umfang angeordnet).

Für eine aktive magnetische Lagerung in axialer Richtung wird die Zuverlässigkeit beispielsweise mittels der in Fig. 8 gezeigten Anordnung redundanter Submodule (Lagergehäuse wurde weggelassen) erreicht.

Der Verzicht auf eine Kommunikation zwischen den Submodulen 7 ermöglicht eine äußerst hohe Zuverlässigkeit bei gleichzeitig sehr geringer Komplexität der Teilsysteme, was allein schon in einer Erhöhung der Zuverlässigkeit resultiert.

Wenn eine Kommunikation zwischen den Submodulen 7 dennoch erforderlich sein sollte, ist für höchste Zuverlässigkeit jedes Submodul 7.i, z.B. mit i=1...6, mit jedem anderen zu verbinden, (vgl. Fig. 10c), und zwar galvanisch entkoppelt. Die beiden anderen Ausführungen, gemäß Fig. 10a und 10b, stellen Varianten dar, die für eine zuverlässige Kommunikation von Submodulen mit Hot-Swap-Funktion nicht geeignet sind: Die Variante gemäß Fig. 10a benötigt einen zentralen Verteiler, der einen "Single Point of Failure" darstellt, die Variante gemäß Fig. 10b ist für einen Hot-Swap ungeeignet, da die Kommunikation (protokollabhängig) spätestens bei Ausfall zweier nicht nebeneinander liegender Submodule unterbrochen ist.

Die Kommunikationskanäle müssen mit aus der Literatur bekannten Methoden laufend überprüft werden. Wenn z.B. aufgrund der Kommunikation eine Kopplung der Submodule 7 entsteht, ist sicherzustellen, dass zum einen jeder Submodul-Elektronik bekannt ist, für welche "Wirkrichtung" bzw. Funktion sie zuständig ist (mit sicherer Kodierung), und dass zum anderen jedes (ohne Elektronik ausgeführte) Submodul von der ihm zugeordneten Elektronik angesteuert wird (ebenfalls sichere Kodierung). Die Komplexität des Systems und damit auch die Fehleranfälligkeit nimmt hierbei jedoch gegenüber entkoppelt arbeitenden Submodulen zu.

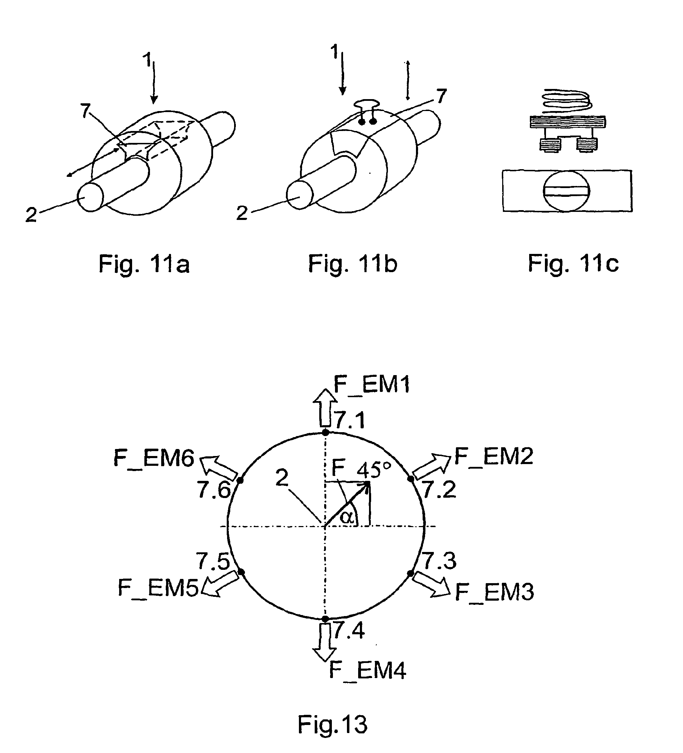

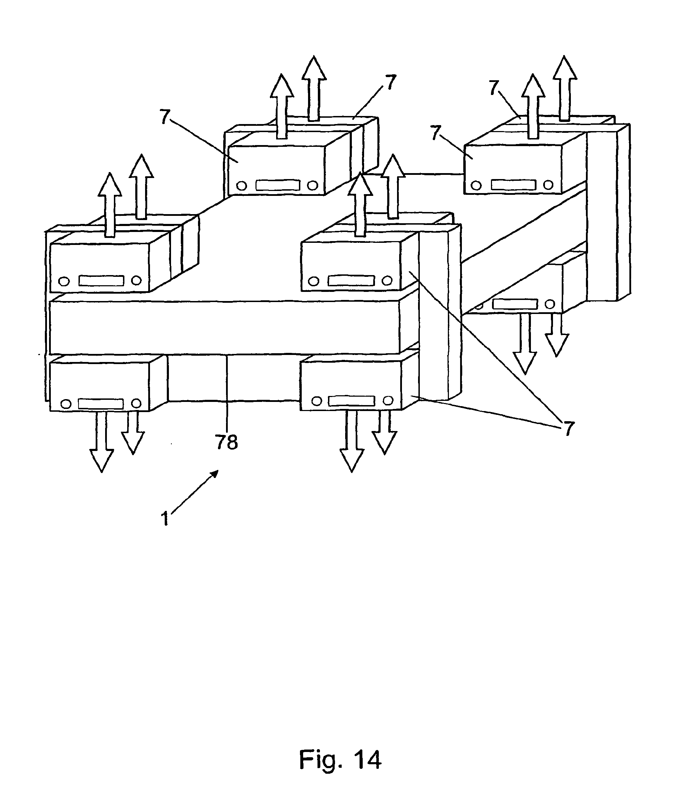

Die Fig. 11 zeigt drei grundsätzliche Beispiele für Möglichkeiten zum Austausch und zur Befestigung von Submodulen 7. Der in Fig. 11a gezeigte axiale Austausch entspricht im Wesentlichen der oben ausführlich beschriebenen, insbesondere aus Fig. 1a ersichtlichen Variante. Die Fig. 11b zeigt eine Ausführungsform für Anwendungen, die in axialer Richtung nicht genügend Platz zum Austausch der Submodule 7 aufweisen. In diesem Fall erfolgt ein radialer Austausch eines des Submoduls 7. *Die in Fig. 11c dargestellte Variante der Befestigung mittels Verschraubung des gesamten Submoduls 7 ist z.B. für die in Fig. 8 beschriebene axiale magnetische Lagerung oder für die in Fig. 14 gezeigte, nachfolgend noch beschriebene allgemeine magnetische Lagerung von Strukturen geeignet. Für die radiale Lagerung von Rotoren 2 ist diese Variante nicht vorteilhaft, da hierbei die oben beschriebene kreissegmentförmige Bearbeitung der zum Rotor 2 zeigenden Seite eine Drehung bei geringem Abstand des Rotors 2 unmöglich macht. Natürlich sind noch weitere varianten und auch Mischformen der beschriebenen Varianten möglich.

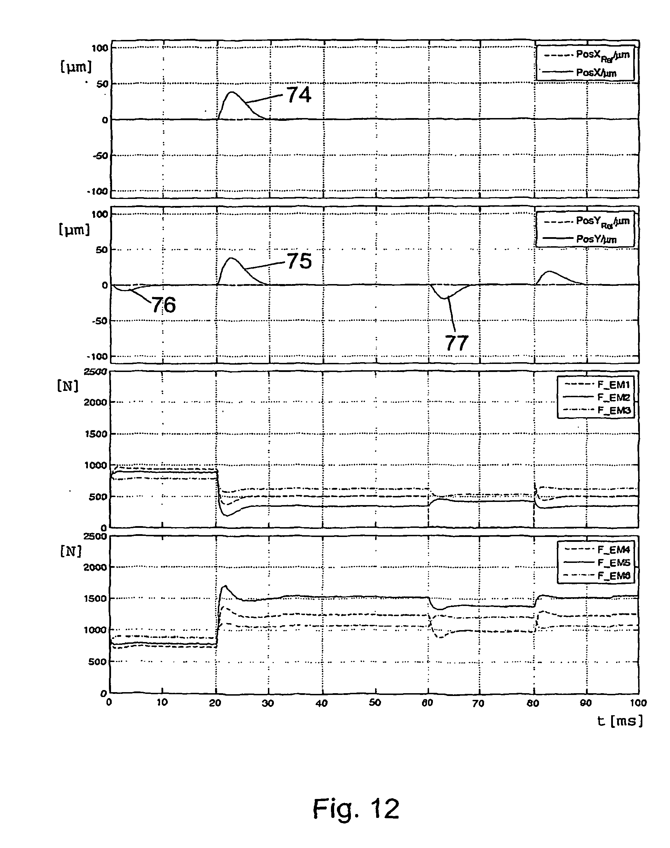

Die Fig. 12 zeigt zur veranschaulichung der Regelfunktion ein Beispiel eines Simulationsergebnisses für einen Rotor 2, der an einer Seite mittels eines aktiven Magnetlagers 1, enthaltend jedes Submodul 7.i (mit i=1... 6), gelagert ist (vgl. auch Fig. 13), wobei jedes Submodul 7 einen unabhängigen PID-Abstandsregler mit unterlagertem Proportional-Stromregler aufweist. In Fig. 13 ist im einzelnen die Anordnung und Nummerierung der Submodule 7.i sowie deren "Kraftwirkrichtungen" F_EMi sowie die Richtung der im folgenden Simulationsbeispiel aufgebrachten Störkraft F gezeigt.

Im Detail sind in Fig. 12 Rotorauslenkungen 74 bzw. 75 (in µm) in der x-Achse und in der y-Achse sowie die von den Submodulen 7.1 bis 7.6 aufgebrachten Kräfte (F_EM 1 bis 6) über der Zeit (t in ms) aufgetragen.

Zum Zeitpunkt 0 ms wird der Rotor 2 aus der Mittellage losgelassen und das Magnetlager 1 aktiviert. Aufgrund der Schwerkraft bewegt sich der Rotormittelpunkt aus der Mittellage nach unten (bei 76 in Fig. 12) und wird vom Magnetlager 1 wieder in die Mittellage gezogen. Zum Zeitpunkt 20 ms wird eine externe Störkraft F von 2 kN in 45°-Richtung (siehe Fig. 13) aufgebracht. Daraus resultiert eine maximale Rotorauslenkung 74, 75 von etwa 40 µm, die innerhalb von 10 ms vollständig ausgeregelt wird; zum Zeitpunkt 60 ms tritt zusätzlich - bei 77 - ein Ausfall vom oberen Submodul 7.1 auf. Daraufhin übernehmen die benachbarten unabhängig arbeitenden Submodule 7.2, 7.6, die allein aufgrund deren lokaler Abstands- bzw. Positionssensoren 11 arbeiten, die Bereitstellung der Lagerkräfte, worauf der Rotor 2 trotz *Belas*tung aufgrund der Gewichtskraft und der 2 kN Störkraft F nach wiederum etwa 10 ms die Mittellage erreicht. Die maximale Rotorauslenkung beträgt hierbei weniger als -20 µm.

Die nach dem Aktivieren eines getauschten Submoduls ersichtlichen Abweichungen aus der Mittellage lassen sich durch einen in diesem Simulationsmodell noch nicht implementierten Soft-Start eliminieren.

Ein zu Testzwecken gebauter Prototyp des vorliegenden Aktorsystems 1 weist folgende Baugruppen auf:

- Leistungsnetzteil 23a mit direkter Dreiphasengleichrichtung für den Leistungsverstärker
- 25 kW - Leistungs-Schaltverstärker 26 mit spezieller zuverlässiger elektronischer Schaltung, die sowohl eine komplette Funktionsüberprüfung im Betrieb als auch eine zuverlässige Abschaltung bei einem Defekt ermöglicht,
- zwei unabhängige Niederspannungsnetzteile 36a, 36b für die Signalverarbeitungsstufe
- Signalverarbeitungsstufe 27 bestehend aus zwei digitalen Signalprozessor-Controllern 18 (DSC1, DSC2), die sowohl für die digitale Regelung als auch für die gegenseitige Fehlererkennung, die Fehlererkennung aller übrigen Baugruppen, die Deaktivierung und die Kommunikation mit dem Prozessleitrechner 24 verantwortlich sind.

Die Fig. 14 zeigt ein weiteres Aktorsystem 1 zur aktiven elektromagnetischen Lagerung einer allgemeinen Struktur, hier eine Platte 78. Gezeigt ist hierbei die Lagerung einer Achsrichtung (vertikal) mittels jeweils einfach redundanten Submodulen 7 an den Ecken der Struktur. Die Lagerung in weiteren Achsrichtungen erfolgt bei Bedarf in analoger Weise. Die von den Submodulen 7 generierten Kräfte sind durch Pfeile angedeutet. Wie bei der zuvor im Detail beschriebenen Lagerung des Rotors 2 weist jedes Submodul 7 wiederum mindestens zwei unabhängige Einrichtungen zur Abstands- bzw. Positionsbestimmung auf. Die Struktur wird auch hier auf einen vorgegebenen Luftspalt geregelt.

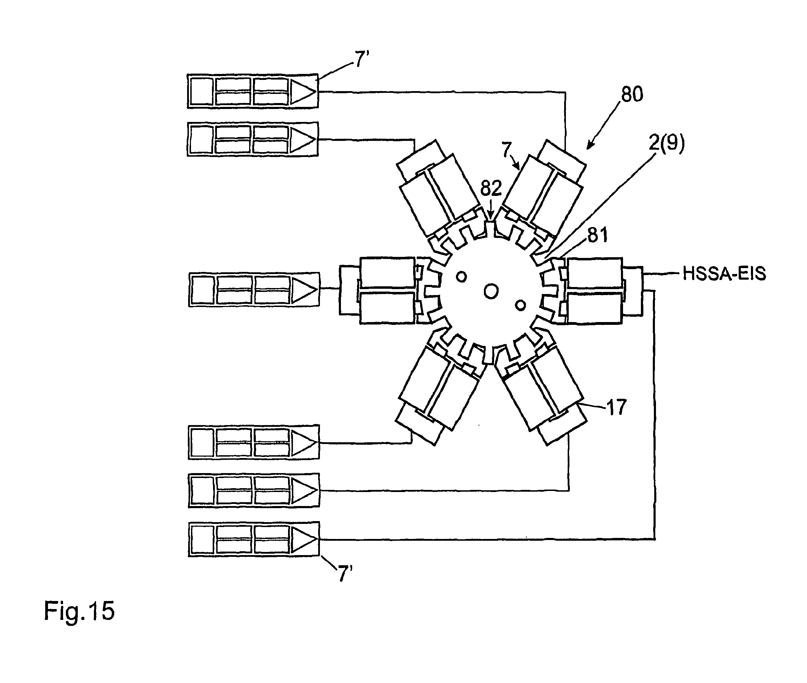

Fig. 15 zeigt ein weiteres Beispiel eines Aktorsystems, hier einen Reluktanzmotor 80 mit höchster Zuverlässigkeit. Dieser Reluktanzmotor 80 weist einen gezahnten Rotor 2 (zur Vermeidung von Wirbelströmen vorteilhafterweise geblecht) sowie - in einer, eine Redundanz ergebenden Anzahl - um den Rotorteil 9 angeordnete Energiewandler-Submodule 7 zur Erzeugung des Drehmoments, die im Betrieb des Motors 80 ausgetauscht werden können.

Die Energiewandler-Submodule (HSSA) 7 können hierbei als U-förmige Elektromagnete 17 (wie in DE000019704576A1) mit jeweils eigenen redundant ausgeführten Sensoren 81, beispielsweise zur Erfassung des Zahnstands und der Rotorbewegung, ausgeführt sein.

Mittels der Elektromagnete 17 werden magnetische Flüsse und in weiterer Folge Kräfte generiert, die in einem Motorantriebsmoment resultieren.

Die Anzahl der Submodule 7 sowie die Position der Submodule 7 in Bezug zur Rotorverzahnung ist hierbei mit einem solchen Versatz auszuführen bzw. die Anzahl der Rotorzähne 82 relativ zur Anzahl der HSSA muss so gewählt werden, dass eine Rotation in beide Richtungen sowie eine Rotation ausgehend vom in einer allgemeinen Lage stillstehenden Rotorteilstück 9 möglich ist.

Als Sollgröße kann den HSSA beispielsweise von einem Prozessleitrechner die Drehzahl des Motors 80 vorgegeben werden. Die Bestromung jedes Elektromagneten 17 erfolgt über die zugeordnete oder integrierte Ansteuerelektronik 7' (s. auch Fig. 4), sobald die Rotorzähne 82 im passenden Positionsbereich sind.

Die Montage der Submodule 7 kann beispielsweise analog zum vorstehend ausführlich erläuterten Ausführungsbeispiel eines aktiven Radialmagnetlagers ausgeführt werden.

Die radiale und axiale Lagerung des Motors 80 kann beispielsweise mittels der zuvor beschriebenen zuverlässigen aktiven magnetischen Lagerung erfolgen. Da die Submodule 7 für die Drehmomentgenerierung, wenn der (geblechte) Rotor- und Statorteil gleiche Länge aufweisen, im bestromten Zustand auch eine Axialkraft bewirken, die bestrebt ist, den gezahnten Rotorteil immer in die Mittellage zu ziehen, kann eventuell auch auf eine explizite axiale Lagerung verzichtet werden.

Ein weiterer Motor ist in Abwandlung gegenüber dem in Fig. 15 gezeigten Reluktanzmotor z.B. mit einem permanentmagnetischen Rotorteil ausgeführt (z.B. als "Thin-disc rotor PM stepper motor").

Eine weitere Möglichkeit zur Verwendung der vorliegenden Aktorsysteme ergibt sich beispielsweise für Pumpen, wobei jeweils ein Aktorsystem für die axiale und radiale Lagerung eines Rotors und ein Aktorsystem zum Antrieb des Rotors, an dem Pumpenräder bzw. -flügel befestigt sind, ausgebildet sind.

## Patentansprüche

1. Durch redundante Anordnung von Elementen fehlertolerantes Aktorsystem (1) mit mindestens einem Energiewandler (3), der in einer eine Redundanz ergebenden Anzahl von Energiewandler-Submodulen (7) ausgeführt ist, die im Betrieb des Aktorsystems (1) ohne Einschränkung der Funktionalität des Aktorsystems austauschbar sind, wobei jedem Energiewandler-Submodul (7) eine eigene, im Submodul integrierte Steuer- bzw. Regeleinheit (18) sowie Istgrößen-Erfassungsmittel (z.B. 11) zur Erfassung eines Betriebs-Istzustands zugeordnet sind, **dadurch gekennzeichnet, dass** die Istgrößen-Erfassungsmittel zu einer im Submodul integrierten Fehlerdetektionseinheit (21) des Energiewandler-Submoduls (7) gehören, die zusammen mit der Steuer- bzw. Regeleinheit (18) zu einem Regelungs- und Fehlererkennungs-Funktionsblock (27) des jeweiligen Submoduls (7) gehören.

2. Aktorsystem nach Anspruch 1, **dadurch gekenn-**zeichnet, dass die Fehlerdetektionseinheit (21) eingerichtet ist, eine Funktionsfehlerüberprüfung durch Vergleich von Istzustands-Signalen mit Referenzsignalen durchzuführen.

3. Aktorsystem nach Anspruch 1 oder 2, **dadurch gekennzeichnet, dass** jedem Energiewandler-Submodul (7) darin integrierte, mit der Fehlerdetektionseinheit (21) verbundeneine Deaktivierungseinheit (22) zugeordnet ist.

4. Aktorsystem nach einem der Ansprüche 1 bis 3, **dadurch gekennzeichnet, dass** jedem Energiewandler-Submodul (7) ein im Submodul integrierter z.B. elektrischer Energiesteller (19) zugeordnet ist, wobei vorzugsweise jedes Energiewandler-Submodul (7) mit einem gegenüber den anderen Submodulen entkoppelten Energiesteller (19) versehen ist.

5. Aktorsystem nach Anspruch 3 und 4, **dadurch gekennzeichnet, dass** dem Energiesteller (19) ein eigener, die Deaktivierungseinheit (22) zumindest zum Teil bildender Schaltverstärker (26) zugeordnet ist.

6. Aktorsystem nach Anspruch 4, **dadurch gekennzeichnet, dass** die Energiewandler-Submodule (7) mit einem Prozessleitrechner (24) verbunden sind, wobei diese Verbindung bevorzugt mittels galvanischer Trennung ausgeführt ist.

7. Aktorsystem nach einem der Ansprüche 1 bis 6, **dadurch gekennzeichnet, dass** die Regeleinheiten eigene Sensoren, z.B. Abstands- bzw. Positions-, magnetischer Fluss-, Rotations-, Strom- und/oder Spannungssensoren, enthalten, und/oder dass jedes Submodul (7) mit zumindest einem, vorzugsweise zumindest zwei unabhängigen Abstands- bzw. Positions-, magnetischen Fluss-, Drehwinkel-, Drehrichtung-, und/oder Drehgeschwindigkeits-Erfassungsmitteln ausgeführt ist.

8. Aktorsystem nach Anspruch 7, **dadurch gekennzeichnet, dass** die Sensoren bzw. Erfassungsmittel in den Submodulen (7) integriert und mit austauschbar sind.

9. Aktorsystem nach einem der Ansprüche 4 bis 8, **gekennzeichnet durch** eine galvanische Trennung zwischen dem Energiesteller (19) und der Steuer- bzw. Regeleinheit (18).

10. Aktorsystem nach einem der Ansprüche 1 bis 9, **dadurch gekennzeichnet, dass** es als radial und/oder axial aktives Elektromagnetlager für einen Rotor (2), als Motor, z.B. Reluktanzmotor (80) oder Motor mit Permanentmagnet-Rotor, zum Antrieb einer Welle, oder zur elektromagnetischen Lagerung eines Strukturteils (78) in Richtung zumindest einer Achse ausgeführt ist.

**11.** Aktorsystem nach Anspruch 10, **dadurch gekennzeichnet, dass** die Energiewandler-Submodule (7) Elektromagnete aufweisen, die als im Betrieb austauschbare Einschubteile in einem Lagergehäuse (5) ausgebildet sind, wobei die Einschubteile und das Lagergehäuse (5) zueinander passende Führungs- und Montageflächen (15, 14) aufweisen.

**12.** Aktorsystem nach einem der Ansprüche 1 bis 11, **dadurch gekennzeichnet, dass** jedes Submodul (7) mit einer gegenüber den anderen Submodulen entkoppelten Energieversorgung (23) versehen und/oder gegebenenfalls durch seine Deaktivierungseinheit vom übrigen Aktorsystem (1) teilweise oder vollständig entkoppelbar ist.

**13.** Aktorsystem nach einem der Ansprüche 1 bis 12, **dadurch gekennzeichnet, dass** eine Funktionsüberprüfung durch Vergleich von Ergebnissen unterschiedlicher Test- oder Messprinzipien vorgesehen ist.

**14.** Verwendung von Aktorsystemen gemäß einem der Ansprüche 1 bis 13 für einen Verdichter, wobei ein Aktorsystem (1) ein axial und radial aktives Magnetlager für einen Rotor (2) und ein Aktorsystem (1) einen Motor zum Antrieb des Rotors bildet.

**15.** Verwendung von Aktorsystemen gemäß einem der Ansprüche 1 bis 13 für eine Pumpe, wobei jeweils ein Aktorsystem (1) für die axiale und radiale Lagerung eines Rotors (2) und ein Aktorsystem (1) zum Antrieb des Rotors, an dem Pumpenräder bzw. -flügel befestigt sind, ausgebildet sind.

**Claims**

**1.** An actuator system (1) that is fault-tolerant due to a redundant arrangement of elements, comprising at least one energy converter (3) designed in a number of energy converter submodules (7) resulting in redundancy, said submodules being exchangeable during operation of the actuator system (1) without restricting the functionality of the actuator system, wherein each energy converter submodule (7) is assigned with its own control unit (18) integrated in the submodule as well as actual value detection means (e.g. 11) for detecting an actual operating state, **characterized in that** the actual value detection means belong to an error detection unit (21) of the energy converter submodule (7) integrated in the submodule, which belongs together with the control unit (18) to a control and error detection function block (27) of the respective submodule (7).

**2.** The actuator system according to claim 1, **characterized in that** the error detection unit (21) is adapted to perform a operation error check by comparing actual state signals with reference signals.

**3.** The actuator system according to claims 1 or 2, **characterized in that** each energy converter submodule (7) is assigned with a deactivation unit (22) integrated therein and connected with the error detection unit (21).

**4.** The actuator system according to any of claims 1 to 3, **characterized in that** each energy converter submodule (7) is assigned with an, for instance, electrical, power controller (19) integrated in the submodule, wherein preferably each energy converter submodule (7) is provided with a power controller (19) decoupled with respect to the other submodules.

**5.** The actuator system according to claims 3 and 4, **characterized in that** the power controller (19) is assigned with an own switching amplifier that forms the deactivation unit (22) at least partially.

**6.** The actuator system according to claim 4, **characterized in that** the energy converter submodules (7) are connected with a process control computer (24), wherein this connection is preferably performed by means of galvanic separation.

**7.** The actuator system according to any of claims 1 to 6, **characterized in that** the control units comprise their own sensors, e.g. position, magnetic flux, rotation, current and/or voltage sensors, and/or that each submodule (7) is designed with at least one, preferably at least two independent position, magnetic flux, angle of rotation, direction of rotation, and/or rotational speed detecting means.

**8.** The actuator system according to claim 7, **characterized in that** the sensors and/or detecting means are integrated in the submodules (7) and are adapted to be exchanged therewith.

**9.** The actuator system according to any of claims 4 to 8, **characterized by** a galvanic separation between the power controller (19) and the control unit (18).

**10.** The actuator system according to any of claims 1 to 9, **characterized in that** it is designed as a radially and/or axially active electromagnetic bearing for a rotor (2), as a motor, e.g. reluctance motor (80) or motor with a permanent magnet rotor, for driving a shaft, or for the electromagnetic bearing of a structural member (78) in the direction of at least one axis.

**11.** The actuator system according to claim 10, **characterized in that** the energy converter submodules (7) comprise electromagnets designed as slide-in parts in a bearing housing exchangeable during operation, wherein the slide-in parts and the bearing housing (5) comprise matching guide and mounting faces (15, 14).

**12.** The actuator system according to any of claims 1 to 11, **characterized in that** each submodule (7) is provided with an energy supply (23) that is decoupled with respect to the other submodules and/or where appropriate is adapted to be partially or completely decoupled from the remaining actuator system (1) by its deactivation unit.

**13.** The actuator system according to any of claims 1 to 12, **characterized in that** a function test is provided by comparing the results of different test or measurement principles.

**14.** A use of actuator systems according to any of claims 1 to 13 for a compressor, wherein one actuator system (1) forms an axially and radially active magnet bearing for a rotor (22) and one actuator system (1) forms a motor for driving the rotor.

**15.** The use of actuator systems according to any of claims 1 to 13 for a pump, wherein one actuator system (1) is designed for the axial and radial bearing of a rotor (2) and one actuator system (1) is designed for driving the rotor to which pump wheels or wings are fastened.

**Revendications**

**1.** Système d'actionneur (1) tolérant à l'erreur du fait d'un agencement redondant d'éléments, avec au moins un convertisseur d'énergie (3), qui est réalisé dans un nombre, produisant une redondance, de sous-modules de convertisseur d'énergie (7), lesquels peuvent être remplacés pendant le fonctionnement du système d'actionneur (1) sans restriction de la fonctionnalité du système d'actionneur, dans lequel une unité de commande et de réglage (18) propre, intégrée au sous-module, ainsi que des moyens d'enregistrement de grandeurs réelles (par exemple 11) pour l'enregistrement d'un état réel de fonctionnement sont attribués à chaque sous-module de convertisseur d'énergie (7), **caractérisé en ce que** les moyens d'enregistrement de grandeurs réelles font partie d'une unité de détection d'erreur (21) intégrée au sous-module du sous-module de convertisseur d'énergie (7), lesquels font partie, avec l'unité de commande et de réglage (18), d'un bloc fonctionnel de réglage et de détection d'erreur (27) du sous-module (7) respectif.

**2.** Système d'actionneur selon la revendication 1, **caractérisé en ce que** l'unité de détection d'erreur (21) est aménagée pour effectuer un contrôle d'erreur de fonctionnement en comparant des signaux d'état réel et des signaux de référence.

**3.** Système d'actionneur selon la revendication 1 ou 2, **caractérisé en ce qu'**une unité de désactivation (22) est attribuée à chaque sous-module de convertisseur d'énergie (7), l'unité de désactivation (22) étant intégrée à l'intérieur de ce dernier et reliée à l'unité de détection d'erreur (21).

**4.** Système d'actionneur selon l'une des revendications 1 à 3, **caractérisé en ce qu'**un régulateur d'énergie (19), intégré au sous-module, par exemple électrique, est attribué à chaque sous-module de convertisseur d'énergie (7), dans lequel de préférence chaque sous-module de convertisseur d'énergie (7) est doté d'un régulateur d'énergie (19) dissocié des autres sous-modules.

**5.** Système d'actionneur selon les revendications 3 et 4, **caractérisé en ce que** le régulateur d'énergie (19) se voit attribué son propre amplificateur de commutation (26), lequel forme au moins en partie l'unité de désactivation (22).

**6.** Système d'actionneur selon la revendication 4, **caractérisé en ce que** les sous-modules de convertisseur d'énergie (7) sont reliés à un ordinateur de contrôle de processus (24), dans lequel cette liaison est réalisée de préférence au moyen d'une séparation galvanique.

**7.** Système d'actionneur selon l'une des revendications 1 à 6, **caractérisé en ce que** les unités de réglage contiennent leurs propres capteurs, par exemple des capteurs d'espacement ou de position, de flux magnétique, de rotation, de courant et/ou de tension, et/ou **en ce que** chaque sous-module (7) est réalisé avec au moins un, de préférence au moins deux, moyen(s) indépendant(s) d'enregistrement d'espacement ou de position, de flux magnétique, d'angle de rotation, de sens de rotation et/ou de vitesse de rotation.

**8.** Système d'actionneur selon la revendication 7, **caractérisé en ce que** les capteurs ou les moyens d'enregistrement sont intégrés aux sous-modules (7) et peuvent être échangés avec ceux-ci.

**9.** Système d'actionneur selon l'une des revendications 4 à 8, **caractérisé par** une séparation galvanique entre le régulateur d'énergie (19) et l'unité de commande ou de réglage (18).

**10.** Système d'actionneur selon l'une des revendications 1 à 9, **caractérisé en ce qu'**il est réalisé, et ce en direction d'au moins un axe, sous forme de palier à électroaimant radialement et/ou axialement actif pour un rotor (2), sous forme de moteur, par exemple un moteur à reluctance (80) ou un moteur avec rotor à aimant permanent, pour l'entraînement d'un arbre, ou pour le système de paliers électromagnétique d'une partie de structure (78).

**11.** Système d'actionneur selon la revendication 10, **caractérisé en ce que** les sous-modules de convertisseur d'énergie (7) présentent des électroaimants, qui sont conçus sous forme de parties insérables remplaçables pendant le service dans un boîtier de palier (5), dans lequel les parties insérables et le boîtier de palier (5) présentent des surfaces de guidage et de montage (15, 14) allant les unes avec les autres.

**12.** Système d'actionneur selon l'une des revendications 1 à 11, **caractérisé en ce que** chaque sous-module (7) est doté d'une alimentation en énergie (23) dissociée des autres modules et/ou peut éventuellement être dissocié, partiellement ou complètement, du système d'actionneur (1) restant par son unité de désactivation.

**13.** Système d'actionneur selon l'une des revendications 1 à 12, **caractérisé en ce qu'**est prévu un contrôle de fonctionnement via la comparaison de résultats de différents principes de test ou de mesure.

**14.** Utilisation de systèmes d'actionneur selon l'une des revendications 1 à 13 pour un compresseur, dans lequel un système d'actionneur (1) forme un palier à aimant axialement et radialement actif pour un rotor (2), et un système d'actionneur (1) forme un moteur pour l'entraînement du rotor.

**15.** Utilisation de systèmes d'actionneur selon l'une des revendications 1 à 13 3 pour une pompe, dans lequel respectivement un système d'actionneur (1) est conçu pour un système de paliers axial et radial d'un rotor (2), et un système d'actionneur (1) est conçu pour l'entraînement du rotor, sur lequel sont fixées des roues et des aubes de pompe.

Fig. 1a

Fig. 1b

Fig. 2

Fig. 3b

Fig. 3a

Fig.4

Fig.5

Fig. 6

Fig. 7

EP 2 304 256 B1

Fig. 8

Fig. 9

Fig. 10a          Fig. 10b          Fig. 10c

Fig. 11a  Fig. 11b  Fig. 11c

F_EM1

7.1

F_EM6

7.6

F_EM2

7.2

F  45°

α

2

F_EM5

7.5

F_EM3

7.3

7.4

F_EM4

Fig.13

Fig. 12

Fig. 14

Fig.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5578880 A
- EP 1216912 A
- US 5806805 A
- US 20040124796 A1
- DE 000019704576 A1

**In der Beschreibung aufgeführte Nicht-Patentliteratur**

- **J. WASSERMANN.** *Kurzbeschreibung des Projekts: Konzept für ein ausfallsicheres aktives Magnetlager, http://web.archive·org/web/20061012175457/www.fwf.ac.at/de/ abstr acts/abstract.asp?L=D&PROJ=P19131*